(19) Europäisches Patentamt
European Patent Office
Office européen des brevets

(11) **EP 4 393 569 A1**

(12) **EUROPEAN PATENT APPLICATION**
published in accordance with Art. 153(4) EPC

(43) Date of publication:
**03.07.2024 Bulletin 2024/27**

(21) Application number: **22861478.0**

(22) Date of filing: **26.08.2022**

(51) International Patent Classification (IPC):
**B01D 61/44** (2006.01)      **B01D 61/46** (2006.01)
**C02F 1/469** (2023.01)

(52) Cooperative Patent Classification (CPC):
**B01D 61/44; B01D 61/46; C02F 1/469;** Y02P 10/20

(86) International application number:
**PCT/JP2022/032300**

(87) International publication number:
**WO 2023/027190 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2021 JP 2021139450**

(71) Applicant: **HIROSAKI UNIVERSITY
Hirosaki-shi, Aomori 036-8560 (JP)**

(72) Inventors:
• **SASAKI, Kazuya
Hirosaki-shi, Aomori 036-8560 (JP)**
• **SHINMURA, Kiyoto
Hirosaki-shi, Aomori 036-8560 (JP)**

(74) Representative: **Simmons & Simmons LLP
(Munich)
Lehel Carré
Thierschplatz 6
80538 Munich (DE)**

(54) **LITHIUM RECOVERY DEVICE AND LITHIUM RECOVERY METHOD**

(57) This lithium recovery device 10C is provided with a processing tank 1 that is partitioned into a supply tank 11 and a recovery tank 13 by a lithium ion-conducting electrolyte membrane 2. In order to selectively move Li+ to an aqueous solution RS in the recovery tank 13 from an aqueous solution SW in the supply tank 11, the aqueous solution SW containing Li+ and other metal ions Mn+, this lithium recovery device 10C is also provided with: a first power supply 51 which is connected between a first electrode 31 that has a porous structure and is arranged so as to be in contact with a supply tank 11-side surface of the electrolyte membrane 2 and a second electrode 32A that is arranged within the recovery tank 13, in such a manner that the first electrode 31 functions as the positive electrode; and a sub power supply 53 which is connected in series to the positive electrode of the first power supply 51, while having the positive electrode thereof connected to a sub electrode 41 that is arranged within the supply tank 11 at a distance from the electrolyte membrane 2.

FIG. 7

**Description**

**TECHNICAL FIELD**

The present invention relates to a lithium recovery device and a lithium recovery method for selectively recovering lithium ions from an aqueous solution.

**BACKGROUND ART**

Lithium (Li) is a resource in high demand as a raw material for lithium-ion secondary batteries, a fuel for nuclear fusion reactors, and the like. There is a need for a less expensive that can provide a stable supply of lithium. Stable sources of Li include seawater and the like with Li dissolved in the form of cations. A positive electrode of a lithium-ion secondary battery mainly contains Li in the form of lithium cobalt oxide ($LiCoO_2$), leading to expectations for a less expensive recovery technology from batteries discarded due to the end of battery life or the like. Although adsorption methods have heretofore been used to recover Li from seawater and the like, recovery through electrodialysis using a lithium ion-conducting electrolyte membrane has been developed as a more selective method (for example, Patent Literature 1 and Non-Patent Literature 1).

A method for recovering Li through electrodialysis, which is described in Patent Literature 1 and the like, will be described with reference to FIG. 11. A lithium recovery device 100 is equipped with a processing tank 1 partitioned into a supply chamber 11 and a recovery chamber 13 by a lithium ion-conducting electrolyte membrane (hereinafter referred to as an electrolyte membrane) 2. The lithium recovery device 100 is also equipped with a power supply 151 connected between an electrode 131 disposed in the supply chamber 11 and an electrode 132 disposed in the recovery chamber 13 with the electrode 131 as a positive electrode. A Li-containing aqueous solution SW such as seawater is charged into the supply chamber 11 as a Li source, and a Li recovery aqueous solution RS such as pure water is charged into the recovery chamber 13.

Voltage application by the power supply 151 causes the reaction of Formula (1) below near the electrode 131 in the Li-containing aqueous solution SW in the supply chamber 11, thus generating water ($H_2O$) and oxygen ($O_2$). When the Li-containing aqueous solution SW contains chloride ions ($Cl^-$), the reaction of Formula (2) below occurs near the electrode 131, thus generating chlorine ($Cl_2$). As hydroxide ions ($OH^-$) and negative ions such as $Cl^-$ decrease, the electrochemical reaction of Formula (3) below occurs, in which $Li^+$ in the Li-containing aqueous solution SW migrate into the electrolyte membrane 2, on the surface of the electrolyte membrane 2 to maintain the charge balance. In each formula, $Li^+$ contained in the electrolyte membrane 2 (electrolyte) is expressed as $Li^+$ (electrolyte).
[Chem. 1]

$$2OH^- \rightarrow H_2O + \frac{1}{2}O_2 \uparrow + 2e^- \quad \cdots \quad (1)$$

$$2Cl^- \rightarrow Cl_2 \uparrow + 2e^- \qquad (2)$$

$$Li^+ \rightarrow Li^+(electrolyte) \qquad (3)$$

On the other hand, in the Li recovery aqueous solution RS in the recovery chamber 13, the reaction of Formula (4) below occurs near the electrode 132, thus generating hydrogen ($H_2$) and $OH^-$. As $OH^-$ increases, the electrochemical reaction of Formula (5) below, which causes $Li^+$ in the electrolyte membrane 2 to migrate, occurs on the surface of the electrolyte membrane 2 to maintain the charge balance. An electrochemical potential difference of $Li^+$ contained in the Li-containing aqueous solution SW, the electrolyte membrane 2, and the Li recovery aqueous solution RS causes $Li^+$ to permeate the electrolyte membrane 2 from the Li-containing aqueous solution SW and migrate into the Li recovery aqueous solution RS. The electrolyte membrane 2 does not allow metal ions $M^{n+}$ other than $Li^+$ contained in the Li-containing aqueous solution SW, such as $Na^+$ and $Ca^{2+}$ with a larger diameter than $Li^+$ to permeate therethrough, since the size of its lattice defect site is small. This selectively moves $Li^+$ from the Li-containing aqueous solution SW to the Li recovery aqueous solution RS, thus obtaining a $Li^+$ aqueous solution (lithium hydroxide aqueous solution) in the recovery chamber 13.
[Chem. 2]

$$2H_2O + 2e^- \rightarrow 2OH^- + H_2 \uparrow \qquad (4)$$

$$Li^+(electrolyte) \rightarrow Li^+ \qquad (5)$$

In the recovery through electrodialysis, the larger the electron $e^-$ migration amount per hour from the Li-containing aqueous solution SW to the electrode 131 and from the electrode 132 to the Li recovery aqueous solution RS, the faster the reactions of Formulas (1), (4), and the like, and the larger the $Li^+$ migration amount per hour ($Li^+$ mobility). To form an electric field in a thickness direction within the electrolyte membrane 2, the electrodes 131 and 132 are preferably provided in contact with the electrolyte membrane 2 (Patent Literature 1) and have a porous structure such as a net so that the aqueous solutions SW and RS come into contact with the electrolyte membrane 2. However, when the voltage of the power supply 151 is increased in an attempt to increase the electron $e^-$ migration amount per hour, the $Li^+$ mobility actually stops increasing after the voltage reaches a certain value. This is considered to be because the electrolyte membrane 2 reaches a potential at which some of the metal ions constituting the electrolyte are reduced due to the voltage applied to both surfaces thereof, thereby also conducting electrons $e^-$. When such a voltage is applied, the electrolyte membrane 2 moves some of the electrons $e^-$ supplied to the electrode 132 from the negative electrode of the power supply 151 to the electrode 131. As a result, even when the electron $e^-$ migration amount per hour from the electrode 131 to the electrode 132 through the power supply 151 increases due to an increase in the applied voltage, the electron $e^-$ migration amount per hour does not increase that much between the aqueous solution SW and the electrode 131, and between the electrode 132 and the aqueous solution RS. Therefore, the $Li^+$ mobility does not increase as much as the applied voltage increases. In addition, energy efficiency deteriorates due to Joule heat power generation by electrons $e^-$ conducted through the electrolyte membrane 2. Therefore, it can be said that this recovery method has a limitation in improvement in productivity.

Therefore, to prevent the electrolyte membrane from developing electron conductivity, the inventors of the present invention have developed a technology to suppress a potential difference between both surfaces of the electrolyte membrane by forming a circuit with electrodes spaced apart from the electrolyte membrane without directly applying a voltage for electrodialysis from both surfaces of the electrolyte membrane (Patent Literature 2). Specifically, as shown in FIG. 11, in a lithium recovery device 100, one of electrodes 132 and 132, here, the electrode 132 is disposed spaced apart from an electrolyte membrane 2 in a recovery chamber 13. According to such a configuration, even when the voltage of the power supply 151 is increased to a certain level, a potential difference between both surfaces of the electrolyte membrane 2 does not increase that much. Therefore, the electrolyte membrane 2 does not easily exhibit electron conductivity, thus making it possible to increase the $Li^+$ mobility.

## CITATION LIST

### Patent Literature

Patent Literature 1: Japanese Patent No. 6233877
Patent Literature 2: JP2019-141807A

### Non-Patent Literature

Non-Patent Literature 1: Kunugi S., Inaguma Y., Itoh M., "Electrochemical recovery and isotope separation of lithium ion employing lithium ion conductive perovskite-type oxides", Solid State Ionics, Vol. 122, Issues 1-4, pp. 35-39, July 1999

## SUMMARY OF INVENTION

### Technical Problem

As described above, in the recovery method using electrodialysis, the higher the applied voltage, the higher the $Li^+$ mobility. However, when the Li-containing aqueous solution SW contains chloride ions, such as seawater, the $Li^+$ mobility actually does not easily increase with respect to the voltage. Furthermore, platinum (Pt), which has excellent catalytic activity for the reaction of Formula (1), is suitable for the electrode 131 on the positive electrode side. However, when the Li-containing aqueous solution SW contains chloride ions, platinum chloride ($PtCl_2$) is formed, which impairs the high catalytic activity inherent to platinum, and increases the electrode reaction overvoltage, resulting in a decrease in the reaction rate of Formula (1). In the recovery method using electrodialysis, the $Li^+$ mobility is rate-limited by $Li^+$ diffusion to the electrolyte membrane surface. Therefore, when the Li concentration of the aqueous solution in contact with the surface of the electrolyte membrane on the $Li^+$ supply side is low, the $Li^+$ mobility does not easily increase with respect to the applied voltage. When seawater is used as a Li source, the low Li concentration makes it difficult to further increase the recovery rate in the recovery method described in Patent Literature 2. Furthermore, lithium recovery from used lithium ion secondary batteries and the like requires a recovery rate closer to 100 %. However, as lithium recovery progresses, the $Li^+$ concentration of the solution of the waste battery used as the Li source decreases, resulting in a decrease in $Li^+$ mobility. The energy efficiency significantly degrades when trying to bring Li remaining in the solution closer to 0. Therefore, these recovery methods have room for improvement in terms of productivity improvement.

The present invention has been made in view of the above problems, and an object thereof is to provide a lithium recovery method and a lithium recovery device capable of recovering lithium from a low-concentration Li source that contains chloride ions, such as seawater, with high productivity using electrodialysis.

## Solution to Problem

Through intensive research, the inventors of the present invention have found out that chloride ions adsorbed on the surface of the electrolyte membrane inhibit the dissolution of lithium ions into the electrolyte membrane. By providing an electrode with a higher potential so as to be spaced apart from the electrolyte membrane in the Li-containing aqueous solution on the positive electrode side, chloride ions are attracted by electrostatic attraction near this electrode, reducing the concentration near the electrolyte membrane surface, and lithium ions are attracted by electrostatic attraction near the electrolyte membrane surface where the potential is relatively low.

Specifically, a lithium recovery device according to the present invention is a device including a processing tank partitioned into a first chamber and a second chamber, in which lithium ions are moved from an aqueous solution containing lithium ions stored in the first chamber to water or an aqueous solution stored in the second chamber. The lithium recovery device according to the present invention includes: a lithium ion-conducting electrolyte membrane that partitions the processing tank; a porous-structure first electrode provided in contact with a surface of the lithium ion-conducting electrolyte membrane on the first chamber side; a second electrode provided in the second chamber; a sub-electrode provided in the first chamber so as to be spaced apart from the first electrode and the lithium ion-conducting electrolyte membrane; a first power supply connected between the first electrode and the second electrode with the first electrode as a positive electrode; and a sub-power supply which connects in series to a positive electrode of the first power supply and has a positive electrode connected to the sub-electrode.

A lithium recovery method according to the present invention is a method for moving lithium ions, in a processing tank partitioned into a first chamber and a second chamber by a lithium ion-conducting electrolyte membrane, from an aqueous solution containing lithium ions stored in the first chamber to water or an aqueous solution stored in the second chamber. In the lithium recovery method according to the present invention, a voltage is applied by a first power supply connected between a porous-structure first electrode provided in contact with a surface of the lithium ion-conducting electrolyte membrane on the first chamber side and a second electrode provided in the second chamber, with the first electrode as a positive electrode and a sub-power supply which connects in series to a positive electrode of the first power supply and has a positive electrode connected to a sub-electrode provided in the first chamber so as to be spaced apart from the lithium ion-conducting electrolyte membrane.

## Advantageous Effects of Invention

The lithium recovery device and the lithium recovery method according to the present invention make it possible to selectively and quickly recover lithium also from an aqueous solution containing chloride ions, such as seawater, in which lithium is present at an extremely low concentration and coexists with other metal ions, thereby improving productivity and preventing degradation of energy efficiency.

## BRIEF DESCRIPTION OF DRAWINGS

FIG.1 is a schematic diagram showing a configuration of a lithium recovery device according to a first embodiment of the present invention.

FIG. 2 is a schematic diagram of the lithium recovery device shown in FIG. 1, for explaining a lithium recovery method according to the first embodiment of the present invention.

FIG. 3 is a circuit diagram of the lithium recovery device shown in FIG. 1, for explaining a lithium recovery method according to a modification of the first embodiment of the present invention.

FIG. 4 is a schematic diagram for explaining a configuration of a lithium recovery device according to the modification of the first embodiment of the present invention.

FIG. 5 is a schematic diagram of the lithium recovery device shown in FIG. 4, for explaining the lithium recovery method according to the modification of the first embodiment of the present invention.

FIG. 6 is a schematic diagram for explaining the configuration of the lithium recovery device and the lithium recovery method according to the modification of the first embodiment of the present invention.

FIG. 7 is a schematic diagram for explaining a configuration of a lithium recovery device and a lithium recovery method according to a second embodiment of the present invention.

FIG. 8 is a circuit diagram of the lithium recovery device shown in FIG. 7, for explaining the lithium recovery method according to the second embodiment of the present invention.

FIG. 9A is a graph showing dependence of lithium migration amount per hour on the LiOH concentration of the Li source in an example and a comparative example according to the first embodiment of the present invention.

FIG. 9B is a graph showing dependence of lithium migration amount per hour on the LiOH concentration of the Li source in an example and a comparative example according to the second embodiment of the present invention.

FIG. 10 is a graph showing the lithium migration amount per hour using a 0.001 mol/L LiOH aqueous solution and a 1.0 mol/L LiCl aqueous solution in examples and comparative examples according to the present invention.

FIG. 11 is a schematic diagram of a lithium recovery device for explaining a lithium recovery method of the related art using electrodialysis.

## DESCRIPTION OF EMBODIMENTS

Hereinafter, embodiments of a lithium recovery device and a lithium recovery method according to the present invention will be described with reference to the drawings. In the drawings, the sizes and the like of specific components may be exaggerated, or the shapes thereof may be simplified for clarity of explanation. In the following description of each embodiment, the same components as those in the previous embodiment are denoted by the same reference numerals, and descriptions thereof will be omitted as appropriate.

[First Embodiment]

[Lithium Recovery Device]

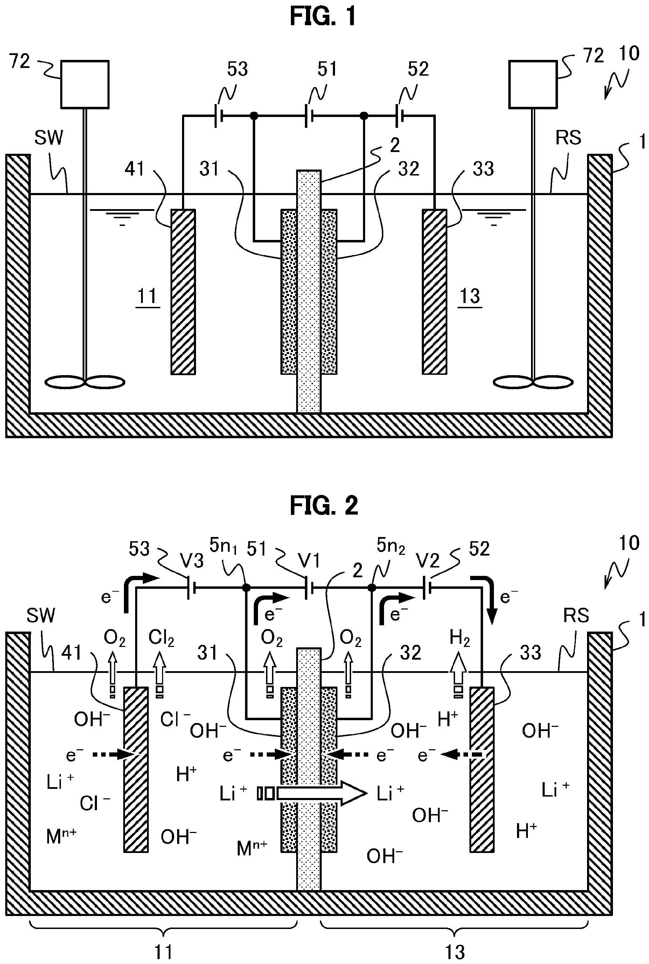

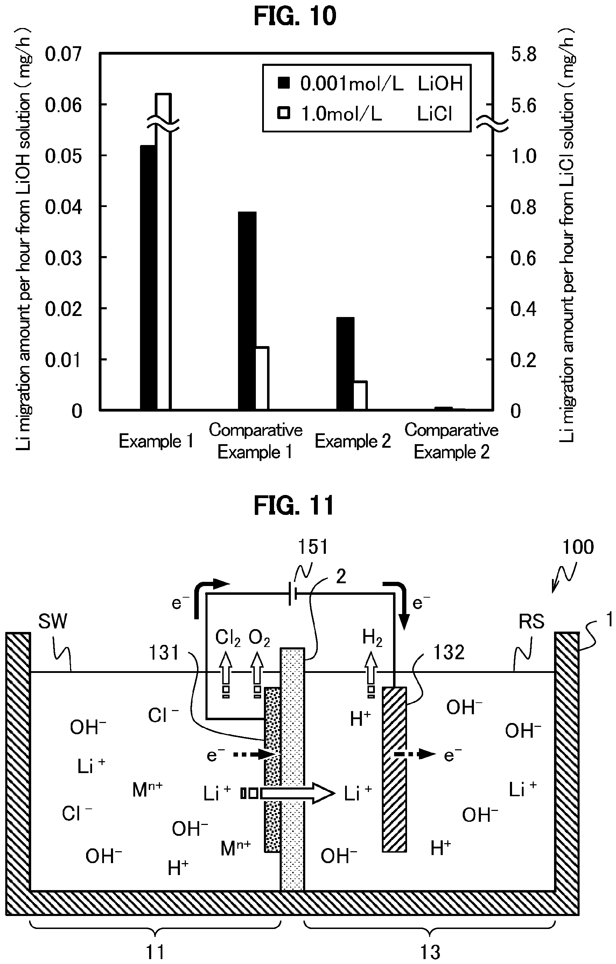

As shown in FIG. 1, a lithium recovery device 10 according to a first embodiment of the present invention includes a processing tank 1, an electrolyte membrane (lithium ion-conducting electrolyte membrane) 2 that partitions the processing tank 1, a first electrode 31 and a second electrode 32 attached onto each surface of the electrolyte membrane 2, a third electrode 33, a sub-electrode 41, three sub-power supplies 53 connected in series, a first power supply 51, and a second power supply 52. The lithium recovery device 10 may further include a stirring device 72. The processing tank 1 is partitioned by the electrolyte membrane 2 into two chambers, including a supply chamber (first chamber) 11 that stores a Li-containing aqueous solution SW such as seawater, and a recovery chamber (second chamber) 13 that stores a Li recovery aqueous solution RS. The first electrode 31 is disposed on the supply chamber 11 side, and the second electrode 32 is disposed on the recovery chamber 13 side. The sub-electrode 41 is provided spaced apart from the electrolyte membrane 2 in the supply chamber 11. The third electrode 33 is provided spaced apart from the electrolyte membrane 2 in the recovery chamber 13. The first power supply 51 has a positive (+) electrode connected to the first electrode 31 and a negative (-) electrode connected to the second electrode 32. The second power supply 52 connects in series to the negative electrode of the first power supply 51, that is, has a positive electrode connected to the second electrode 32 and a negative electrode connected to the third electrode 33. The sub-power supply 53 connects in series to the positive electrode of the first power supply 51, that is, has a negative electrode connected to the third electrode 33 and a positive electrode connected to the sub-electrode 41. Therefore, the lithium recovery device 10 according to this embodiment has a configuration different from that of a lithium recovery device of the related art using electrodialysis (for example, a lithium recovery device 100 shown in FIG. 11) in having both of the electrodes 31 and 32 (electrodes 131 and 132 in FIG. 11) in contact with the electrolyte membrane 2 so that the first power supply 51 (power supply 151 in FIG. 11) directly applies a voltage between both surfaces of the electrolyte membrane 2, and in further including the sub-power supply 53 and the second power supply 52 connected in series to the both electrodes of the first power supply 51, respectively, the sub-electrode 41 connected to the positive electrode of the sub-power supply 53, and the third electrode 33 connected to the negative electrode of the second power supply 52. Hereinafter, components of the lithium recovery device according to the embodiment of the present invention will be described.

The processing tank 1 is made of a material that does not undergo deterioration such as corrosion even when coming into contact with the Li-containing aqueous solution SW and the Li recovery aqueous solution RS (for example, lithium hydroxide (LiOH) aqueous solution) including after Li recovery. The processing tank 1 only needs to have a volume corresponding to required processing capacity, and its shape and the like are not particularly limited.

The electrolyte membrane 2 is an electrolyte that has lithium ion conductivity and does not conduct metal ions $M^{n+}$ other than $Li^+$ contained in the Li-containing aqueous solution SW, and preferably does not conduct electrons $e^-$.

The metal ions $M^{n+}$ other than $Li^+$ are, for example, $K^+$, $Na^+$, $Mg^{2+}$, $Ca^{2+}$, and the like when the Li-containing aqueous solution SW is seawater. The electrolyte membrane 2 is more preferably an electrolyte made of ceramics having these properties, specifically, lithium lanthanum titanium oxide ($La_{2/3-x} Li_{3x}TiO_3$, also referred to as LLTO) or the like. Such an electrolyte membrane 2 has a certain proportion of lattice defects. The size of these lattice defect sites is small. This prevents the electrolyte membrane 2 from conducting metal ions with a larger diameter than $Li^+$.

The first electrode 31 and the second electrode 32 are electrodes paired up with each other to apply a voltage between both surfaces of the electrolyte membrane 2. The first electrode 31 is provided in contact with the surface of the electrolyte membrane 2 on the supply chamber 11 side. The second electrode 32 is provided in contact with the surface of the electrolyte membrane 2 on the recovery chamber 13 side. In the lithium recovery device 10 according to this embodiment, the first electrode 31 is also paired up with a third electrode 33 to be described later to apply a voltage. The first electrode 31 and the second electrode 32 apply a voltage to a wide area of the electrolyte membrane 2 and each preferably have a net-like porous structure that allows the Li-containing aqueous solution SW or the Li recovery aqueous solution RS to come into contact with a sufficient area of the surface of the electrolyte membrane 2.

The first electrode 31 is preferably formed of an electrode material that has catalytic activity and electron conductivity for the reaction of Formula (1) below and the reaction of Formula (3) below, and that is stable even when a voltage is applied in the Li-containing aqueous solution SW. The electrode material is more preferably a material that can be easily processed into the shape described above. The second electrode 32 is preferably formed of an electrode material that has catalytic activity and electron conductivity for the reaction of Formula (5) below and the reaction of Formula (1) below, and that is stable even when a voltage is applied in the Li recovery aqueous solution RS, including after Li recovery. The electrode material is more preferably a material that can be easily processed into the shape described above. The first electrode 31 and the second electrode 32 are each preferably made of platinum (Pt), for example. Alternatively, the first electrode 31 can be made of carbon (C) when the Li-containing aqueous solution SW contains $Cl^-$. Formula (3) below shows a reaction where $Li^+$ in the aqueous solution (Li-containing aqueous solution SW) migrates into the electrolyte membrane 2. Formula (5) below shows a reaction where $Li^+$ in the electrolyte membrane 2 migrates into the aqueous solution (Li recovery aqueous solution RS).

[Chem. 3]

$$2OH^- \rightarrow H_2O + \frac{1}{2}O_2 \uparrow + 2e^- \quad \cdots \quad (1)$$

$$Li^+ \rightarrow Li^+(electrolyte) \qquad (3)$$

$$Li^+(electrolyte) \rightarrow Li^+ \qquad (5)$$

The sub-electrode 41 is an electrode for forming a potential higher than that of the surface of the electrolyte membrane 2 in the Li-containing aqueous solution SW. Therefore, it is preferable that the sub-electrode 41 is disposed in the supply chamber 11 so as not to contact the electrolyte membrane 2 and the first electrode 31, and is disposed parallel to the first electrode 31. To keep the voltage V3 of the sub-power supply 53 low, the sub-electrode 41 is preferably disposed close to the first electrode 31 to the extent that it does not short-circuit, as will be described later. It is also preferable that the sub-electrode 41 has a shape such as a mesh so as to increase the contact area with the Li-containing aqueous solution SW. The sub-electrode 41 is formed of an electrode material that has catalytic activity and electron conductivity for the reaction of Formula (1) below and that is stable even when a voltage is applied in the Li-containing aqueous solution SW. When the Li-containing aqueous solution SW contains halide ions, the sub-electrode 41 further has catalytic activity for the oxidation reaction, for example, the reaction of Formula (2) below in the case of chloride ions ($Cl^-$). Such an electrode material for the sub-electrode 41 is preferably carbon (C), platinum (Pt), or carbon carrying Pt fine particles as a catalyst, for example.

[Chem. 4]

$$2OH^- \rightarrow H_2O + \frac{1}{2}O_2 \uparrow + 2e^- \quad \cdots \quad (1)$$

$$2Cl^- \rightarrow Cl_2 \uparrow + 2e^- \qquad (2)$$

The third electrode 33 is an electrode for forming a potential lower than that of the surface of the electrolyte membrane 2 in the Li recovery aqueous solution RS. Therefore, it is preferable that the third electrode 33 is disposed in the recovery chamber 13 so as not to contact the electrolyte membrane 2 and the second electrode 32, and is disposed parallel to the second electrode 32. To keep the voltage V2 of the second power supply 52 low, the third electrode 33 is preferably disposed close to the second electrode 32 to the extent that it does not short-circuit, as will be described later. It is also preferable that the third electrode 33 has a shape such as a mesh so as to increase the contact area with the Li recovery aqueous solution RS. The third electrode 33 is formed of an electrode material that has catalytic activity and electron conductivity for the reaction of Formula (4) below and that is stable even when a voltage is applied in the Li recovery aqueous solution RS, including after Li recovery. The electrode material is preferably platinum (Pt). Alternatively, the third electrode 33 can be made of carbon (C), copper (Cu) or stainless steel, which is stable at a potential lower than the potential at which the reaction of Formula (4) below occurs. The third electrode 33 can be, more preferably, made of a material carrying Pt fine particles on the surface of such materials, which function as a catalyst.

[Chem. 5]

$$2H_2O + 2e^- - 2OH^- + H_2 \uparrow ... \qquad (4)$$

The first power supply 51, the second power supply 52, and the sub-power supply 53 are DC power supply units that apply predetermined voltages V1, V2, and V3, respectively. The sub-power supply 53, the first power supply 51, and the second power supply 52 are connected in series in this order from the positive electrode side. The first power supply 51 has a positive electrode connected to the first electrode 31 and a negative electrode connected to the second electrode 32. The second power supply 52 has a positive electrode connected to the second electrode 32 and a negative electrode connected to the third electrode 33. The sub-power supply 53 has a positive electrode connected to the sub-electrode 41 and a negative electrode connected to the first electrode 31. In other words, a connection node $5n_1$ between the first power supply 51 and the sub-power supply 53 connects to the first electrode 31, and a connection node $5n_2$ between the first power supply 51 and the second power supply 52 connects to the second electrode 32 (see FIG. 2). The first power supply 51 applies the voltage V1 between both surfaces of the electrolyte membrane 2 to generate a potential gradient for causing the electrolyte membrane 2 to conduct $Li^+$. The second power supply 52 applies the voltage V2 to form a potential lower than that of the surface of the electrolyte membrane 2 to the Li recovery aqueous solution RS, thereby suppressing conduction of electrons $e^-$ by the electrolyte membrane 2 from the recovery chamber 13 side to the supply chamber 11 side. The first power supply 51 and the second power supply 52, which are connected in series, act as one main power supply and apply a voltage (V1+V2) between the Li-containing aqueous solution SW and the Li recovery aqueous solution RS. The voltage (V1+V2) is larger than the voltage V1 applied between both surfaces of the electrolyte membrane 2. The sub-power supply 53 applies the voltage V3 to form a potential higher than that of the surface of the electrolyte membrane 2 to the Li-containing aqueous solution SW, thus unevenly distributing $Li^+$ by electrostatic attraction near the surface of the electrolyte membrane 2, which has a relatively low potential, and also keeping anions such as $Cl^-$ away by electrostatic repulsion.

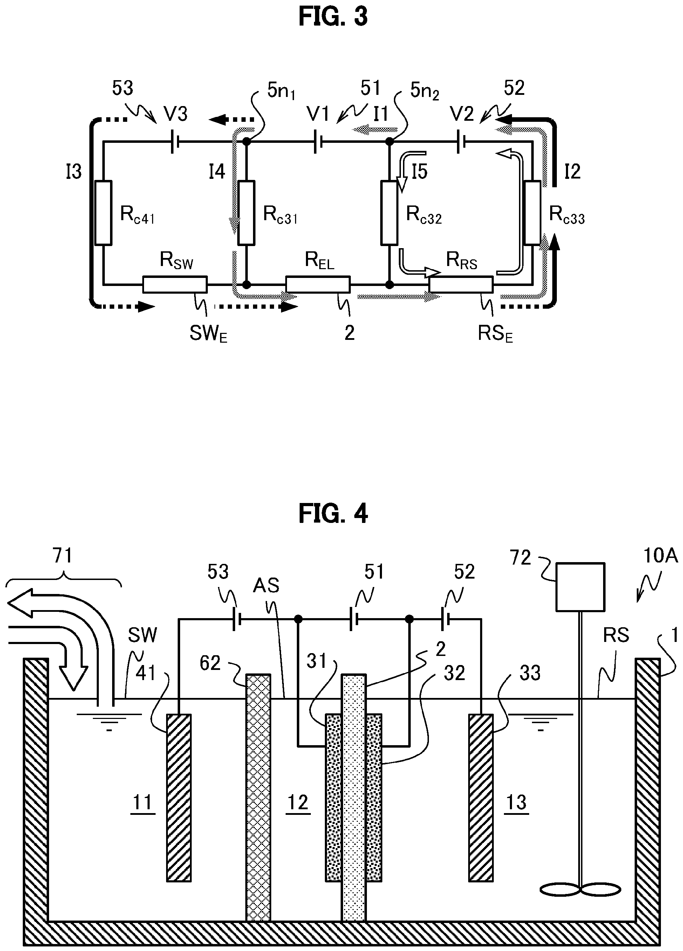

The stirring device 72 is a device provided as necessary to circulate the Li-containing aqueous solution SW in the supply chamber 11 so that the Li-containing aqueous solution SW in contact with the first electrode 31 is continuously replaced during operation. The stirring device 72 may similarly circulate the Li recovery aqueous solution RS in the recovery chamber 13 so that the Li recovery aqueous solution RS in contact with the second electrode 32 is continuously replaced. A known device can be used as the stirring device 72, which has a structure in which screws are rotated in the chambers 11 and 13 to stir the aqueous solutions SW and RS, as shown in FIG. 1, for example. Alternatively, a circulation device 71 may be used to circulate the aqueous solutions SW and RS by a pump between the chambers 11 and 13 and a circulation tank provided outside the processing tank 1 (see a modification shown in FIG. 4).

The Li-containing aqueous solution SW is a Li source and is an aqueous solution containing other metal ions $M^{n+}$ such as $K^+$, $Na^+$, and $Ca^{2+}$ in addition to lithium ions $Li^+$. Examples of such an aqueous solution include seawater, waste brine after extracting salt from seawater, groundwater such as hot spring water, and an aqueous solution prepared by crushing and roasting a used lithium-ion secondary battery, dissolving it in acid, and then adjusting the pH.

The Li recovery aqueous solution RS is a solution for storing lithium ions $Li^+$ recovered from the Li-containing aqueous solution SW. To selectively obtain only Li from metals, the Li recovery aqueous solution RS is preferably an aqueous solution that does not contain metal ions (such as $Na^+$) other than lithium ions $Li^+$, more preferably an aqueous solution that does not contain anions other than $OH^-$, especially halide ions, and may be pure water. However, to ensure smooth $Li^+$ migration, the Li recovery aqueous solution RS is preferably an aqueous solution containing $Li^+$ (lithium hydroxide (LiOH) aqueous solution) at the start of recovery (at the start of power application).

The lithium recovery device 10 may further include a heating device that heats the electrolyte membrane 2 via the Li-containing aqueous solution SW or Li recovery aqueous solution RS, in order to bring the electrolyte membrane 2 to a predetermined temperature. The heating device can be a known heater that heats a liquid, and preferably has a temperature adjustment function. The heating device is of a throw-in type (immersion type), for example, and is installed so as to be immersed in the Li recovery aqueous solution RS in the recovery chamber 13. Therefore, a heating portion of the heating device that is immersed in the Li recovery aqueous solution RS is made of a material that does not undergo deterioration such as corrosion even when coming into contact with the Li recovery aqueous solution RS, as with the processing tank 1. The heating device only needs to be able to bring the electrolyte membrane 2 to a predetermined temperature, and does not need to keep the Li-containing aqueous solution SW or the Li recovery aqueous solution RS at a uniform temperature. However, depending on the volume of the processing tank 1 and the like, the stirring device 72 may be provided. The temperature of the electrolyte membrane 2 may be at least the freezing point or lower than the boiling point of the aqueous solutions SW and RS, and is preferably a high temperature as described later.

The lithium recovery device 10 may further include a liquid level sensor or the like to sense changes in the amounts of the Li-containing aqueous solution SW and the Li recovery aqueous solution RS during operation. When carbon dioxide ($CO_2$) in the atmosphere unintentionally dissolves into the Li recovery aqueous solution RS and lithium carbonate ($Li_2CO_3$) precipitates during operation, the conductivity of the Li recovery aqueous solution RS decreases. To prevent this, the lithium recovery device 10 is preferably configured so that the Li recovery aqueous solution RS is not exposed to the atmosphere. For safety reasons, the lithium recovery device 10 preferably further includes an exhaust unit that exhausts gases such as $O_2$, $H_2$, and $Cl_2$ generated during operation (due to the reactions of Formulas (1), (4), and (2)) to prevent them from filling inside. The lithium recovery device 10 can also recover $Cl_2$ and the like generated from the Li-containing aqueous solution SW as a by-product. To this end, the lithium recovery device 10 preferably has check valves provided, for example, in the supply chamber 11 and the recovery chamber 13 of the processing tank 1, respectively, to exhaust the gases generated from the aqueous solutions SW and RS to the outside of the processing tank 1 and to prevent outside air from entering.

[Lithium Recovery Method]

A lithium recovery method according to the first embodiment of the present invention will be described with reference to FIGs. 2 and 3. The lithium recovery method according to this embodiment is performed as follows using the lithium recovery device 10 according to the first embodiment shown in FIG. 1. FIG. 2 omits the stirring device 72.

In the lithium recovery device 10, the sub-power supply 53, the first power supply 51, and the second power supply 52, which are connected in series, can be considered as one power supply (referred to as a power supply 50). Similarly, the first power supply 51 and the second power supply 52 can be considered as one power supply (referred to as a main power supply 51-52). This power supply 50 applies a positive voltage (V3+V1+V2), with respect to the third electrode 33, to the sub-electrode 41. At the same time, the main power supply 51-52 applies a positive voltage (V1+V2), with respect to the third electrode 33, to the first electrode 31. Then, the following reaction occurs in the Li-containing aqueous solution SW in the supply chamber 11. In the vicinity of the sub-electrode 41 and the first electrode 31, hydroxide ions ($OH^-$) in the Li-containing aqueous solution SW cause the reaction of Formula (1) below, releasing electrons $e^-$ to generate water ($H_2O$) and oxygen ($O_2$) and emitting the electrons $e^-$ to the sub-electrode 41 and the first electrode 31. When the Li-containing aqueous solution SW contains halide ions, for example, chloride ions ($Cl^-$), the reaction of Formula (2) below further occurs, generating a gas corresponding to the type of anions contained in the Li-containing aqueous solution SW, such as emitting electrons $e^-$ to generate chlorine ($Cl_2$). In the Li-containing aqueous solution SW, as $OH^-$ and other anions decrease, the reaction of Formula (3) below, where $Li^+$ in the Li-containing aqueous solution SW migrates into the electrolyte membrane 2, occurs on the surface of the electrolyte membrane 2, that is, near the first electrode 31 to maintain the charge balance.

[Chem. 6]

$$2OH^- \rightarrow H_2O + \frac{1}{2}O_2 \uparrow + 2e^- \quad \cdots \ (1)$$

$$2Cl^- \rightarrow Cl_2 \uparrow + 2e^- \qquad (2)$$

$$Li^+ \rightarrow Li^+(electrolyte) \qquad (3)$$

Here, in the Li-containing aqueous solution SW, application of the voltage V3 by the sub-power supply 53 forms a potential gradient in which the sub-electrode 41 has a potential higher than that of the surface of the electrolyte membrane 2 (first electrode 31). Therefore, $OH^-$ and $Cl^-$ are attracted to the sub-electrode 41 by electrostatic attraction. Since the potential of the sub-electrode 41 is sufficiently high, $Cl^-$ is easily oxidized in the vicinity thereof, making it easier for the reaction of Formula (2) to rapidly occur. Therefore, the reaction of Formula (2) reduces $Cl^-$ near the sub-electrode 41. Then, $Cl^-$ is further attracted to the sub-electrode 41 by electrostatic attraction. As a result, the $Cl^-$ concentration becomes relatively low near the first electrode 31, which has a potential lower than that of the sub-electrode 41, thus causing the reaction of Formula (1) to mainly occur.

Meanwhile, the following reaction occurs in the Li recovery aqueous solution RS in the recovery chamber 13. In the vicinity of the third electrode 33, the voltage (V1+V2) application by the main power supply 51-51 supplies electrons

$e^-$ to $H_2O$ in the Li recovery aqueous solution RS, causing the reaction of Formula (4) below to generate hydrogen ($H_2$) and $OH^-$. Then, as $H^+$ decreases near the third electrode 33, the reaction of Formula (5) below, where $Li^+$ in the electrolyte membrane 2 migrates into the Li recovery aqueous solution RS, occurs on the surface of the electrolyte membrane 2, that is, near the second electrode 32. At the same time, the second power supply 52 applies a positive voltage V2 of a predetermined level based on the voltages V1 and V3, with respect to the third electrode 33, to the second electrode 32. Then, in the vicinity of the second electrode 32, $OH^-$ in the Li recovery aqueous solution RS causes the reaction of Formula (1) below, emitting electrons $e^-$ to the second electrode 32 to generate $H_2O$ and $O_2$. As a result, excess cations due to the reaction of Formula (1) below and the reaction of Formula (5) below near the second electrode 32 cause charge imbalance. However, $Li^+$ quickly migrates from the second electrode 32 to the vicinity of the third electrode 33 to compensates for the lack of cations generated near the third electrode 33 due to the reaction of Formula (4) below, thus resolving the charge imbalance in the Li recovery aqueous solution RS. The relative relationship in level between the voltage V1 and the voltage V2 will be described later.

[Chem. 7]

$$2H_2O + 2e^- \rightarrow 2OH^- + H_2 \uparrow \qquad (4)$$

$$Li^+(electrolyte) \rightarrow Li^+ \qquad (5)$$

$$2OH^- \rightarrow H_2O + \frac{1}{2}O_2 \uparrow +2e^- \quad \cdots \quad (1)$$

From the reaction of Formula (3) to the reaction of Formula (5), that is, the infiltration of $Li^+$ in the Li-containing aqueous solution SW from the surface of the electrolyte membrane 2 to the inside thereof, the $Li^+$ migration in the electrolyte membrane 2, and the migration of $Li^+$ in the electrolyte membrane 2 into the Li recovery aqueous solution RS proceed as follows. The application of the voltage (V 1+V2) by the main power supply 51-52 causes the reaction of Formula (3) where $Li^+$ in the Li-containing aqueous solution SW burrows into lattice defect sites on the surface of the electrolyte membrane 2. The application of the voltage V1 by the first power supply 51 causes a potential gradient in the electrolyte membrane 2 where the potential of the surface on the opposite side (recovery chamber 13 side) is low. Therefore, the $Li^+$ that has burrowed into the lattice defect site on the surface jumps (hops) to a lattice defect site near the deep side of the electrolyte membrane 2. Li+ thus keeps migrating from the lattice defect site of the electrolyte membrane 2 to the nearby lattice defect site. Finally, as the reaction of Formula (5), Li+ migrates from the lattice defect site on the surface on the recovery chamber 13 side into the Li recovery aqueous solution RS. As the $Li^+$ at the lattice defect site on the surface of the electrolyte membrane 2 on the supply chamber 11 side migrates deep into the electrolyte membrane 2, other $Li^+$ adsorbed in the vicinity of an empty lattice defect site or $Li^+$ in the Li-containing aqueous solution SW burrows into the empty lattice defect site, and these $Li^+$ similarly migrate in the electrolyte membrane 2.

In the lithium recovery device 10 according to this embodiment, as described above, a potential gradient is formed in the Li-containing aqueous solution SW by the application of the voltage V3 by the sub-power supply 53. This causes the $Cl^-$ concentration near the electrolyte membrane 2 to be relatively low even when the Li-containing aqueous solution SW contains $Cl^-$. Therefore, adsorption of $Cl^-$ to the surface of the electrolyte membrane 2 is small, thus suppressing inhibition of the reaction of Formula (3). In the Li-containing aqueous solution SW, the potential gradient causes $Li^+$ as cations to be attracted to the surface of the electrolyte membrane 2 (first electrode 31) by electrostatic attraction and become relatively highly concentrated in this vicinity. Therefore, even when the $Li^+$ concentration of the Li-containing aqueous solution SW is low, $Li^+$ can sufficiently diffuse to the surface of the electrolyte membrane 2. A large $Li^+$ concentration gradient, which is unproportional to the $Li^+$ concentration of the Li-containing aqueous solution SW, is formed between both surfaces of the electrolyte membrane 2, thus causing a large chemical potential difference due to such a $Li^+$ concentration gradient. This facilitates the $Li^+$ migration between lattice defect sites in the electrolyte membrane 2 described above.

The application of the voltage V2 by the second power supply 52 causes a potential gradient in the Li recovery aqueous solution RS, where the vicinity of the surface of the electrolyte membrane 2 is positive and the vicinity of the third electrode 33 is negative. $Li^+$ is attracted to the vicinity of the third electrode 33 by electrostatic attraction, thus reducing the $Li^+$ concentration near the surface of the electrolyte membrane 2. This causes a large chemical potential difference, due to the increased $Li^+$ concentration gradient, between both surfaces of the electrolyte membrane 2, thus further facilitating the $Li^+$ migration between the lattice defect sites in the electrolyte membrane 2.

The $Li^+$ migration in the electrolyte membrane 2 becomes faster as the $Li^+$ concentration gradient in the electrolyte membrane 2 becomes larger. Therefore, the stronger the electric field generated in the Li-containing aqueous solution SW by the voltage V3 of the sub-power supply 53, and the stronger the electric field generated in the Li recovery aqueous solution RS by the voltage V2 of the second power supply 52, the faster the reaction of Formula (3) and the reaction of Formula (5), making it possible to quickly move and recover $Li^+$ in the Li-containing aqueous solution SW into the electrolyte membrane 2 and further into the Li recovery aqueous solution RS. Moreover, the stronger the electric field generated in the Li-containing aqueous solution SW, the faster the reaction of Formula (3) can be even when the $Li^+$ concentration of the Li-containing aqueous solution SW is low. When the Li-containing aqueous solution SW contains $Cl^-$, the stronger the electric field generated in the Li-containing aqueous solution SW, the less likely the reaction of Formula (3) is inhibited by $Cl^-$. The $Li^+$ migration in the electrolyte membrane 2 also becomes faster as the potential gradient in the electrolyte membrane 2 becomes larger, that is, the voltage V1 of the first power supply 51 becomes larger. Furthermore, the larger the voltage V1, the larger the difference in reaction rate between the reaction of Formula (4) and the reaction of Formula (1), increasing the rate of increase in $OH^-$ in the Li recovery aqueous solution RS. This increases the rate of the reaction of Formula (5), allowing $Li^+$ in the electrolyte membrane 2 to migrate into the Li recovery aqueous solution RS.

As described above, the larger the voltage V1 and the voltage V2 and the stronger the electric field generated by the voltage V3, the larger the $Li^+$ migration amount per hour. However, when the voltage V3 is increased to strengthen the electric field and reaches a voltage at which water electrolysis occurs, the reaction of Formula (4) below occurs near the first electrode 31 to generate $H_2$ in the Li-containing aqueous solution SW. This reaction receives electrons $e^-$, thus reversing the direction of the electron $e^-$ migration (see FIG. 2) from that of the reaction of Formula (1) below near the first electrode 31. When the vicinity of the first electrode 31, that is, the surface of the electrolyte membrane 2 on the supply chamber 11 side reaches the $H_2$ generation potential, regardless of the level of the voltage V1 applied between both surfaces of the electrolyte membrane 2, some of the metal ions constituting the electrolyte membrane are reduced (for example, when the electrolyte membrane 2 is LLTO, $Ti^{4+}+e^- \rightarrow Ti^{3+}$), causing the electrolyte membrane 2 to develop electron conductivity. Then, the electrons $e^-$ conducted through the electrolyte membrane 2 generate Joule heat, thus causing a sharp drop in energy efficiency in the $Li^+$ migration. This further reduces the effect of preventing the electrolyte membrane 2 from developing the electron conductivity due to application of the voltage V2 to be described later. Therefore, the voltage V3 is less than the voltage at which water electrolysis occurs, and preferably higher within this range. The voltage at which water electrolysis occurs is actually several hundred mV higher than a theoretical voltage (1.229 V, 25 °C) based on electrode performance and the like to determine the electrode reaction overvoltage of both electrodes (the first electrode 31 and the sub-electrode 41 for the voltage V3). In this embodiment, even if the voltage V3 is higher than or equal to the above value, when the voltage V2 is larger than the voltage V3 by a certain level, the potential of the surface of the electrolyte membrane 2 on the supply chamber 11 side does not drop below the $H_2$ generation potential, causing no water electrolysis. The voltage V3 can thus be set up to an even higher value.

[Chem. 8]

$$2H_2O + 2e^- \rightarrow 2OH^- + H_2 \uparrow \qquad (4)$$

$$2OH^- \rightarrow H_2O + \frac{1}{2}O_2 \uparrow + 2e^- \quad \cdots \quad (1)$$

Here, reference numeral "$SW_E$" represents a portion of the Li-containing aqueous solution SW sandwiched between the first electrode 31 and the sub-electrode 41, and reference numeral "$RS_E$" represents a portion of the Li recovery aqueous solution RS sandwiched between the second electrode 32 and the third electrode 33. The lithium recovery device 10 according to this embodiment includes a closed circuit in which the second power supply 52, the first power supply 51, the sub-power supply 53, the Li-containing aqueous solution $SW_E$, the electrolyte membrane 2, the Li recovery aqueous solution $RS_E$, and the second power supply 52 are connected in a loop in this order, as shown in FIG. 3. In this closed circuit (first circuit), the power supplies 53, 51, and 52 (power supply 50) connected in series supply currents I3, I1, and I2 flowing counterclockwise as indicated by the dotted pattern arrows. When the electrolyte membrane 2 does not exhibit electron conductivity, $Li^+$ migrates in the opposite direction (in the same direction as the current I1) instead of the electrons $e^-$. In the Li-containing aqueous solution SW, $OH^-$ migrates instead of some of the electrons e'. Similarly, in the Li recovery aqueous solution RS, $OH^-$ migrates and $Li^+$ and $H^+$ migrate in the opposite direction instead of some of the electrons $e^-$.

In the lithium recovery device 10, the positive electrode of the first power supply 51 and the negative electrode (connection node $5n_1$) of the sub-power supply 53 are connected to the electrolyte membrane 2 and the Li-containing aqueous solution $SW_E$ via the first electrode 31, respectively. The negative electrode of the first power supply 51 and the positive electrode (connection node $5n_2$) of the second power supply 52 are connected to the electrolyte membrane 2 and the Li recovery aqueous solution $RS_E$ through the second electrode 32, respectively. Therefore, in the lithium recovery device 10, currents can flow in either direction from the connection node $5n_1$ to the electrolyte membrane 2 or from the Li-containing aqueous solution $SW_E$ or the electrolyte membrane 2 to the connection node 5m. Similarly, in the lithium recovery device 10, currents can flow in either direction from the connection node $5n_2$ to the Li recovery aqueous solution $RS_E$ or from the electrolyte membrane 2 to the connection node $5n_2$. $R_{EL}$ represents the resistance of the electrolyte membrane 2 (the resistance between the first electrode 31 and the second electrode 32 and $Li^+$ migration resistance. Rsw represents the resistance of the Li-containing aqueous solution $SW_E$ (the resistance between the first electrode 31 and the sub-electrode 41). $R_{RS}$ represents the resistance of the Li recovery aqueous solution $RS_E$ (the resistance between the second electrode 32 and the third electrode 33). The lithium recovery device 10 further includes a reaction resistance $R_{c41}$ due to the reaction of Formula (1) ($O_2$ generation) and the reaction of Formula (2) ($Cl_2$ generation) in the sub-electrode 41, a reaction resistance $R_{c31}$ due to the reaction of Formula (1) and the reaction of Formula (2) in the first electrode 31, and a reaction resistance $R_{c32}$' due to the reaction of Formula (4) in the second electrode 32A. Then,

As described above, in the lithium recovery device 10, the electrons $e^-$ migrate or do not migrate from the Li-containing aqueous solution SW to the first electrode 31, so that the reaction of Formula (4) does not occur in the first electrode 31. The currents thus flow or do not flow from the connection node $5n_1$ connected to the positive electrode of the first power supply 51 to the first electrode 31. Therefore, the lithium recovery device 10 includes a closed circuit as a second circuit in which the second power supply 52, the first power supply 51, the electrolyte membrane 2, the Li recovery aqueous solution $RS_E$, and the second power supply 52 are connected in a loop in this order. In this closed circuit, as shown in FIG. 3, the first power supply 51 and the second power supply 52 (main power supply 51-52) connected in series supply currents I4, I1, and I2 flowing as indicated by the gray arrows. I4 represents the current that is branched from the current I1 (from the connection node $5n_1$) and flows to the electrolyte membrane 2 through the first electrode 31. Therefore, the lithium recovery device 10 may set the voltage V3 to allow the current I4 to flow in such a direction or to prevent the current I4 from flowing in such a direction (from flowing in the opposite direction), that is, to satisfy I4 $\geq$ 0. As for the current I4, I1 $\geq$ I3 may be satisfied since I3+I4= I1 holds true.

To this end, the lithium recovery device 10 may connect ammeters in series (not shown) to the first power supply 51 and the sub-power supply 53, for example, and apply voltages V1 and V3 while measuring currents I1 and I3. A higher effect can be obtained by strengthening the electric field generated in the Li-containing aqueous solution SW even when the voltage V3 is low, as the resistance Rsw between the first electrode 31 and the sub-electrode 41 and the reaction resistance $R_{c41}$ at the sub-electrode 41 are lower. The reaction resistance $R_{c41}$ is lower as the area of the sub-electrode 41 immersed in the Li-containing aqueous solution SW is larger and as the catalytic activity of the sub-electrode 41 for the reaction of Formula (1) increases. The resistance Rsw is lower as the areas of the first electrode 31 and the sub-electrode 41 immersed in the Li-containing aqueous solution SW are larger and as the distance between them is shorter. The higher the electron conductivity of the Li-containing aqueous solution SW, the lower the resistance $R_{SW}$.

As described above, the stronger the electric field generated in the Li-containing aqueous solution SW by the voltage V3, the faster the $Li^+$ migration speed with respect to the $Li^+$ concentration of the Li-containing aqueous solution SW, and the more the inhibition of $Li^+$ migration by $Cl^-$ contained in the Li-containing aqueous solution SW is suppressed. The total reaction amount of the reaction of Formula (1) and/or the reaction of Formula (2) at the first electrode 31 such that the current 14 flows from the positive electrode (connection node $5n_1$) of the first power supply 51 to the first electrode 31 as well as the reaction of Formula (1) and the reaction of Formula (2) at the sub-electrode 41 is directly related to the amount of $Li^+$ that migrates through the electrolyte membrane 2, and $Li^+$ equivalent to the amount of currents (I3+I4) migrates through the electrolyte membrane 2. Therefore, in order to further increase the Li recovery rate, the total current amount of (I3+I4), that is, the current I1 is preferably larger. In terms of energy efficiency, I4 is preferably smaller, and most preferably I4= 0 (I1= I3). However, during operation, I1 > I3 is preferable including a margin so as to prevent I1 < I3. In order to increase the Li recovery rate, it is preferable that I1 > I3 (I4 > 0) is satisfied to generate $O_2$ also at the first electrode 31. Even when the voltage V3 is less than the voltage at which water electrolysis occurs, the current I4 flows in the opposite direction (I4 < 0) unless the voltage V1 is greater than or equal to a certain level with respect to the voltage V3, causing the electrolyte membrane 2 to develop electron conductivity (see a second embodiment to be described below). In this embodiment, the voltage V1 can be set to a sufficient level as described below.

In the lithium recovery method according to the present invention, the larger the voltage V1, the more the $Li^+$ migration amount can be increased. However, when the voltage V1, that is, the potential difference between both surfaces of the electrolyte membrane 2 is higher than or equal to a potential (referred to as an electrolyte reduction potential as appropriate) that causes some of the metal ions constituting the electrolyte membrane 2 to be reduced (for example, when the electrolyte membrane 2 is LLTO, $Ti^{4+}+e^- \rightarrow Ti^{3+}$), the electrolyte membrane 2 can conduct electrons $e^-$ from the recovery chamber 13 side to the supply chamber 11 side (see Patent Literature 2). Therefore, even when the voltage V1 is further increased, the $Li^+$ migration amount does not increase as much as the voltage V1 increases, and energy efficiency deteriorates.

However, in this embodiment, the second power supply 52 connected between the second electrode 32 and the third electrode 33 applies the voltage V2 to generate a suitable potential difference, with the second electrode 32 being positive. Then, the electrons e⁻ supplied from the third electrode 33 to the Li recovery aqueous solution RS migrate from the second electrode 32 on the surface of the electrolyte membrane 2 to the positive electrode of the second power supply 52. The potential of the second electrode 32 is thus maintained as high as the $O_2$ generation potential. Since the $O_2$ generation potential is higher than the reduction potential of the metal ions constituting the electrolyte membrane 2, the electrolyte membrane 2 does not conduct the electrons e⁻ regardless of the potential difference between both surfaces thereof. Therefore, the voltage V1 can be set to a voltage higher than the electrolyte reduction voltage of the electrolyte membrane 2. In other words, when such a large voltage V1 is applied without applying the voltage V2, the electrons e⁻ are taken in from the surface of the electrolyte membrane 2 on the negative electrode side (recovery chamber 13 side), thereby reducing the metal ions in the electrolyte membrane 2. This phenomenon easily occurs particularly with transition metal ions. However, in this embodiment, as described above, due to the application of the voltage V2, the electrolyte membrane 2 does not reach the reduction potential of metal ions, and the electrolyte membrane 2 does not conduct the electrons e⁻.

As described above, in the lithium recovery method according to this embodiment, electrons e⁻ are released from the Li recovery aqueous solution RS to the second electrode 32, thus allowing a current to flow from the positive electrode of the second power supply 52 through the second electrode 32 to the Li recovery aqueous solution $RS_E$. Therefore, the lithium recovery device 10 includes a closed circuit as a third circuit, including the second power supply 52 and the Li recovery aqueous solution $RS_E$, and the second power supply 52 supplies currents I5 and I2 flowing as indicated by void arrows. I5 represents the current that is branched from the current I2 and flows (from the connection node $5n_2$) to the second electrode 32. Therefore, in order to allow the current I5 to flow or to prevent the current I5 from flowing in such a direction (from flowing in the opposite direction), that is, to satisfy I5 ≥ 0, the lithium recovery device 10 is configured as follows.

As for the current I5, in order to satisfy I5 ≥ 0 since I1+I5+ I2, the voltages V1 and V2 are set to satisfy I1 ≤ I2. $R_{EL}$ represents the resistance of the electrolyte membrane 2 (the resistance between the first electrode 31 and the second electrode 32 and Li⁺ migration resistance). $R_{RS}$ represents the resistance of the Li recovery aqueous solution $RS_E$ (the resistance between the second electrode 32 and the third electrode 33). The lithium recovery device 10 further includes a reaction resistance $R_{c33}$ due to the reaction of Formula (4) ($H_2$ generation) in the third electrode 33 and a reaction resistance $R_{c32}$ due to the reaction of Formula (1) ($O_2$ generation) in the second electrode 32. Formula (6) below represents the first circuit, Formula (7) below represents the second circuit, and Formula (8) below represents the third circuit. Here, resistances of the electrodes 31, 32, 41, and 33 and wiring are ignored.

[Math. 1]

$$V1 + V2 + V3 = I2 \times (R_{RS} + R_{c33}) + I3 \times (R_{SW} + R_{c41}) + I1 \times R_{EL} \cdots (6)$$

$$V1 + V2 = I2 \times (R_{RS} + R_{c33}) + I1 \times R_{EL} + I4 \times R_{c31}$$

$$= I2 \times (R_{RS} + R_{c33}) + I1 \times (R_{EL} + R_{c31}) - I3 \times R_{c31} \cdots (7)$$

$$V2 = I2 \times (R_{RS} + R_{c33}) + I5 \times R_{c32} = I2 \times (R_{RS} + R_{c33} + R_{c32}) - I1 \times R_{c32} \cdots (8)$$

Formula (9) below is obtained from Formulas (6) and (7). Formula (10) below is obtained from Formulas (7) and (8). The current I1 is expressed by Formula (11) below from Formula (10). The current I2 is expressed by Formula (12) below from Formula (8). The current I3 is expressed by Formula (13) below from Formula (9). Formula (14) below may hold true to satisfy I1 ≤ I2. Formula (15) below is obtained by solving Formula (14). Formula (16) below is obtained by substituting Formula (12) for I2 and Formula (13) for I3 in Formula (11) below and solving for I1. Formula (17) below is obtained by substituting Formula (16) in Formula (15).

[Math. 2]

$$V3 = I3 \times (R_{SW} + R_{c31} + R_{c41}) - I1 \times R_{c31} \quad \cdots (9)$$

$$V1 = I1 \times (R_{EL} + R_{c31} + R_{c32}) - I2 \times R_{c32} - I3 \times R_{c31} \quad \cdots (10)$$

$$I1 = \frac{V1 + I2 \times R_{c32} + I3 \times R_{c31}}{R_{EL} + R_{c31} + R_{c32}} \quad \cdots (11)$$

$$I2 = \frac{V2 + I1 + R_{c32}}{R_{RS} + R_{c33} + R_{c32}} \quad \cdots (12)$$

$$I3 = \frac{V3 + I1 + R_{c31}}{R_{SW} + R_{c31} + R_{c41}} \quad \cdots (13)$$

$$I1 \leq \frac{V2 + I1 \times R_{c32}}{R_{RS} + R_{c33} + R_{c32}} \quad \cdots (14)$$

$$I1 \leq \frac{V2}{R_{RS} + R_{c33}} \quad \cdots (15)$$

$$I1 \times \{A\} \quad \cdots (16)$$
$$= (R_{SW} + R_{c31} + R_{c41}) \times (R_{RS} + R_{c32} + R_{c33}) \times V1$$
$$+ (R_{SW} + R_{c31} + R_{c41}) \times R_{c32} \times V2 + (R_{RS} + R_{c32} + R_{c33}) \times R_{c31} \times V3$$

$$\{A\}$$
$$= (R_{RS} + R_{c33}) \times [(R_{EL} + R_{c32}) \times (R_{SW} + R_{c31} + R_{c41}) + R_{c31} \times (R_{SW} + R_{c41})]$$
$$+ (R_{EL}R_{SW} + R_{EL}R_{c31} + R_{EL}R_{c41} + R_{SW}R_{c31} + R_{c31}R_{c41}) \times R_{c32}$$

$$V2 \geq \frac{1}{\{B\}} \times (R_{RS} + R_{c32} + R_{c33}) \times [(R_{SW} + R_{c31} + R_{c41}) \times V1 + R_{c31} \times V3] \quad \cdots (17)$$

$$\{B\}$$
$$= (R_{SW} + R_{c31} + R_{c41}) \times R_{EL} + R_{c31} \times (R_{SW} + R_{c41})$$
$$+ \frac{(R_{EL}R_{SW} + R_{EL}R_{c31} + R_{EL}R_{c41} + R_{SW}R_{c31} + R_{c31}R_{c41}) \times R_{c32}}{R_{RS} + R_{c33}}$$

From Formula (17), the voltage V2 of the second power supply 52 is set to be larger as the voltage V1 of the first power supply 51 and the voltage V3 of the sub-power supply 53 become larger. To this end, the lithium recovery device 10 may connect ammeters in series (not shown) to the first power supply 51 and the second power supply 52, for example, and apply voltages V1 and V2 while measuring currents I1 and I2. The voltage V2 can also be set to be lower as the resistance $R_{RS}$ between the second electrode 32 and the third electrode 33 and the reaction resistance $R_{c33}$ at the third electrode 33 are lower. The reaction resistance $R_{c33}$ is lower as the area of the third electrode 33 immersed in the Li recovery aqueous solution RS is larger and as the catalytic activity of the third electrode 33 for the reaction of Formula (4) increases. The resistance $R_{RS}$ is lower as the areas of the second electrode 32 and the third electrode 33 immersed in the Li recovery aqueous solution RS are larger and as the distance between them is shorter. The higher the electron conductivity of the Li recovery aqueous solution RS, the lower the resistance $R_{RS}$.

The reaction amount of the reaction of Formula (1) occurring at the second electrode 32, that is, the level of the current I5 ($\geq 0$) is not directly related to the $Li^+$ migration amount. On the other hand, when the voltage V2 is insufficient with respect to the voltages V1 and V3 and Formula (17) does not hold true, I5 < 0 is satisfied, causing a current to flow from the second electrode 32 to the negative electrode of the sub-power supply 53 and causing the reaction of Formula (4) to occur also at the second electrode 32. In this event, Formula (18) below represents the voltage V1. $R_{C32}'$ represents a reaction resistance due to the reaction of Formula (4) ($H_2$ generation) at the second electrode 32. However, even when I5 < 0, |I5| only needs to be small so that the potential of the surface of the electrolyte membrane 2 on the recovery chamber 13 side determined by (|I5|$\times R_{C32}'$) is higher than the reduction potential of the metal ions constituting the electrolyte membrane 2 (in the case of Ti, $Ti^{4+}+e^- \rightarrow Ti^{3+}$; -0.488 V vs. SHE).

[Math. 3]

$$V1 = I1 \times R_{EL} + I4 \times R_{c31}' - I5 \times R_{c32}'{}'$$

$$= I1 \times (R_{EL} + R_{c31} + R_{c32}') - I2 \times R_{c32}' - I3 \times R_{c31} \cdots (18)$$

As described above, the larger the voltage V2, the larger the $Li^+$ concentration gradient in the electrolyte membrane 2 and the faster the $Li^+$ migration in the electrolyte membrane 2. However, as the voltage V2 becomes larger with respect to the voltage V2 (minimum value in Formula (17)) where I1= I2, the current I5 increases and the $O_2$ generation (reaction of Formula (1)) near the second electrode 32 and the $H_2$ generation (reaction of Formula (4)) near the third electrode 33 increase more than the $Li^+$ migration amount, resulting in energy efficiency degradation. On the other hand, even when the voltage V2 satisfies I1 > I2, the electrolyte membrane 2 does not exhibit electron conductivity if the difference between I1 and I2 is sufficiently small, as described above. However, during the operation of the lithium recovery device 10, it is not easy to maintain the currents I1 and I2 constant because the resistance $R_{RS}$ decreases as the $Li^+$ concentration of the Li recovery aqueous solution RS increases, for example. Therefore, it is preferable that the voltage V2 is set to satisfy I1 < I2 as a margin. For example, at the start of operation of the lithium recovery device 10, the voltage V2 where I1= I2 is set to a value of more than or equal to 0.5 V, preferably more than 0 V, with a difference of less than or equal to 1 V or less than or equal to (V1/10).

In the lithium recovery method according to the present invention, as the operating time passes, the liquid volumes of the Li-containing aqueous solution SW and the Li recovery aqueous solution RS decrease. It is preferable to periodically or constantly replenish the Li-containing aqueous solution SW into the supply chamber 11. Alternatively, as will be described later, it is more preferable to constantly circulate the Li-containing aqueous solution SW to and from the processing tank 1 during operation. As for the Li recovery aqueous solution RS, it is preferable to periodically or constantly add water ($H_2O$) or the like to the recovery chamber 13. In the lithium recovery device 10, it is preferable that the liquid levels in the supply chamber 11 and the recovery chamber 13 are the same during operation.

For the Li recovery aqueous solution RS after the operation is completed, Li can be recovered, for example, by evaporating water as necessary to concentrate Li, and then generating and precipitating lithium carbonate ($Li_2CO_3$) by carbon dioxide gas ($CO_2$) bubbling or the like. Alternatively, Li can also be recovered by further cooling the generated lithium carbonate or evaporating water, leading to a supersaturated state, to generate and precipitate lithium hydroxide (LiOH). When the Li-containing aqueous solution SW contains $Cl^-$, $Cl_2$ is generated on the supply chamber 11 side, which is collected together with the concurrently generated $O_2$. Then, $Cl_2$ and $O_2$ can be separated and collected by a known method using a difference in boiling point ($O_2$: - 183.0 °C, $Cl_2$: -101.5 °C).

In the present invention, the sub-power supply 53 is provided, which is connected in series to the positive electrode of the first power supply 51 that applies the voltage V1 between both surfaces of the electrolyte membrane 2, and the sub-electrode 41 having a potential higher than that of the surface of the electrolyte membrane 2 is provided in the Li-containing aqueous solution SW. $Li^+$ is thus unevenly distributed near the electrolyte membrane 2, while $Cl^-$ is kept away from the electrolyte membrane 2. This suppresses the inhibition of dissolution of $Li^+$ in the Li-containing aqueous solution SW into the electrolyte membrane 2 due to the adsorption of $Cl^-$ on the surface of the electrolyte membrane 2. Therefore, $Li^+$ can be efficiently recovered from the Li-containing aqueous solution SW as a Li source containing a high concentration of $Cl^-$, such as seawater. Since the $Li^+$ concentration is relatively high near the electrolyte membrane 2 in the Li-containing aqueous solution SW, a $Li^+$ concentration gradient can be efficiently formed in the electrolyte membrane 2, thus accelerating the $Li^+$ migration in the electrolyte membrane 2. Such an effect becomes more pronounced when the $Li^+$ concentration of the Li-containing aqueous solution SW is low.

Furthermore, in this embodiment, in addition to the first power supply 51 that applies the voltage V1 between both surfaces of the electrolyte membrane 2, the second power supply 52 connected in series to the negative electrode of the first power supply 51 is provided. The third electrode 33 with a lower potential than the surface of the electrolyte membrane 2 is provided in the Li recovery aqueous solution RS. By setting this potential difference, that is, the voltage V2 of the second power supply 52 in accordance with the voltage V1, the electrons $e^-$ are hardly conducted in the electrolyte membrane 2 even when a large potential difference is generated between both surfaces of the electrolyte membrane 2 to reach the metal ion reduction potential. As a result, the recovery rate of $Li^+$ can be increased corresponding to the potential gradient in the electrolyte membrane 2. Since the first electrode 31 and the second electrode 32 are provided in contact with both surfaces of the electrolyte membrane 2, the first power supply 51 can efficiently form a potential gradient in the electrolyte membrane 2, thus accelerating the $Li^+$ migration in the electrolyte membrane 2. Furthermore, when the voltage V2 of the second power supply 52 is increased as the voltage V1 of the first power supply 51 is increased, a $Li^+$ concentration gradient can be more efficiently formed in the electrolyte membrane 2, thus further accelerating the $Li^+$ migration in the electrolyte membrane 2.

The $Li^+$ migration in the electrolyte membrane 2 becomes faster as the temperature becomes higher, besides the voltage V1. Therefore, it is preferable that the temperature of the electrolyte membrane 2 is high. The resistances $R_{EL}$, $R_{SW}$, and $R_{RS}$ of the electrolyte membrane 2 and the aqueous solutions SW and RS, as well as the reaction resistances at the electrodes 31, 32, 41, and 33 are lower as the temperature is higher. The applicable temperature range is higher than or equal to the freezing point and below the boiling point of the aqueous solutions SW and RS, preferably higher than or equal to 20 °C.


(Modification)

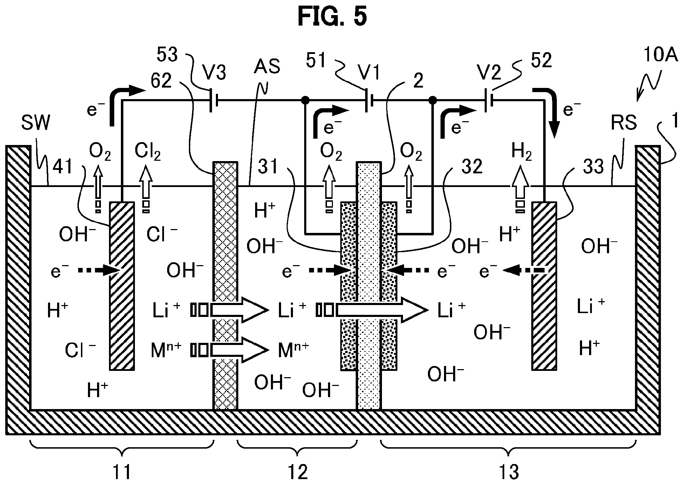

In the lithium recovery device according to the above embodiment, since the Li source containing chloride ions is in direct contact with the surface of the electrolyte membrane on the supply chamber side, the catalytic activity impaired to some extent through long-time operation even if chloride ions are kept away from the first electrode provided on the surface of the electrolyte membrane by electrostatic repulsion due to the voltage applied from the sub-power supply. In Li recovery using electrodialysis, the higher the pH of the aqueous solution on the $Li^+$ supply side of the electrolyte membrane relative to the aqueous solution on the recovery side, the higher the $Li^+$ mobility. When seawater is used as a Li source, for example, seawater is slightly alkaline, whereas the aqueous solution on the recovery side changes from pure water before the start to a LiOH aqueous solution as the process progresses, increasing the concentration. This also increases the pH to be higher than that on the supply side, resulting in a decrease in $Li^+$ mobility. Therefore, in order to prevent chloride ions from contacting the electrolyte membrane and to increase the pH of the aqueous solution that contacts the surface of the electrolyte membrane on the supply side, the lithium recovery device is configured as follows. Hereinafter, a lithium recovery device and a lithium recovery method according to a modification of the first embodiment of the present invention will be described with reference to FIGs. 4 and 5.

As shown in FIG. 4, a lithium recovery device 10A according to the modification of the first embodiment of the present invention includes a processing tank 1, an electrolyte membrane (lithium ion-conducting electrolyte membrane) 2 and an ion exchange membrane 62 that partition the processing tank 1, a first electrode 31 and a second electrode 32 attached to each surface of the electrolyte membrane 2, a third electrode 33, a sub-electrode 41, and three power supplies 53, 51, and 52 connected in series. The lithium recovery device 10A may further include a circulation device (circulator) 71 and a stirring device 72. The processing tank 1 is partitioned in one direction by the ion exchange membrane 62 and the electrolyte membrane 2 into three chambers, including a supply chamber (first chamber) 11 that stores a Li-containing aqueous solution SW such as seawater, an intermediate chamber 12 that stores a Li-containing aqueous solution AS, and a recovery chamber (second chamber) 13 that stores a Li recovery aqueous solution RS. Specifically, the ion exchange membrane 62 partitions the supply chamber 11 and the intermediate chamber 12, while the electrolyte membrane 2 partitions the intermediate chamber 12 and the recovery chamber 13. The sub-electrode 41 is provided in the supply chamber 11. The third electrode 33 is provided spaced apart from the electrolyte membrane 2 in the recovery chamber 13. Therefore, the lithium recovery device 10A according to this modification is different from the lithium recovery device 10 according to the above embodiment shown in FIG. 1 in further including the ion exchange membrane 62 that partitions the processing tank 1 between the sub-electrode 41 and the first electrode 31, and in that the supply chamber 11 is further partitioned by the ion exchange membrane 62 into the supply chamber 11 and the intermediate chamber 12.

The ion exchange membrane 62 conducts cations including at least $Li^+$. The ion exchange membrane 62 prevents the Li-containing aqueous solution AS in the intermediate chamber 12 from containing halide ions such as $Cl^-$. The ion exchange membrane 62 can be a cation exchange membrane that passes cations and blocks anions, a monovalent cation permselective ion exchange membrane that passes monovalent cations only, such as $Li^+$, $K^+$, and $Na^+$, a bipolar monovalent ion permselective ion exchange membrane that passes monovalent ions, or the like. Known ion exchange membranes can be used. For example, SELEMION (registered trademark) CMV (manufactured by AGC Engineering Co., Ltd.), NEOSEPTA CSE (manufactured by Astom Co., Ltd.) can be used as the cation exchange membrane. SELEMION (registered trademark) CSO (manufactured by AGC Engineering Co., Ltd.) can be used as the monovalent cation permselective ion exchange membrane. NEOSEPTA CIMS (manufactured by Astom Co., Ltd.) can be used as the bipolar monovalent ion permselective ion exchange membrane. In the lithium recovery device 10A, it is preferable that the distance between the sub-electrode 41 and the first electrode 31 is short, as in the above embodiment. Therefore, it is preferable that the ion exchange membrane 62 is disposed at a short distance from the electrolyte membrane 2 (first electrode 31). It is therefore preferable that the intermediate chamber 12 is short in the partitioning direction of the processing tank 1.

The circulation device 7 includes, for example, a pump, a filter for removing dust, and the like. When the Li-containing aqueous solution SW is seawater, hot spring water or the like, in particular, it is preferable to apply a voltage while circulating the Li-containing aqueous solution SW from these supply sources into the supply chamber 11. With this method, the $Li^+$ concentration of the Li-containing aqueous solution SW is maintained almost constant even as $Li^+$ recovery progresses. The Li recovery rate is less likely to decrease even with a low-concentration Li aqueous solution, allowing for long time continuous operation. Alternatively, the circulation device 7 may replace the Li-containing aqueous solution SW in the supply chamber 11 every predetermined period of operation. The lithium recovery device 10A may have a structure in which the supply chamber 11 is opened to the outside (for example, into the seawater) through a filter or the like.

The Li-containing aqueous solution AS is an aqueous solution obtained by removing anions other than $OH^-$, such as $Cl^-$ from the Li-containing aqueous solution SW stored in the supply chamber 11. The Li-containing aqueous solution AS can be pure water at the start of recovery (at the start of power application), similar to the Li recovery aqueous solution RS, and is preferably a $Li^+$-containing aqueous solution (LiOH aqueous solution).

As in the case of the above embodiment, the sub-power supply 53 applies the voltage V3 to form a potential higher than that of the surface of the electrolyte membrane 2 to the Li-containing aqueous solution AS in contact with the surface of the electrolyte membrane 2 on the supply side, thus unevenly distributing $Li^+$ by electrostatic attraction near the surface of the electrolyte membrane 2. In this modification, furthermore, the Li-containing aqueous solution SW on the supply chamber 11 side generates a high potential difference between both surfaces of the ion exchange membrane 62, that is, between the Li-containing aqueous solution SW and the Li-containing aqueous solution AS, thereby moving the cations containing $Li^+$ in the Li-containing aqueous solution SW to the Li-containing aqueous solution AS.

In the lithium recovery device 10A, the intermediate chamber 12 may also be provided with a circulation device 71 or a stirring device 72. The circulation device 71 that circulates the Li-containing aqueous solution AS may include a precipitation tank that precipitates cations other than $Li^+$ in the Li-containing aqueous solution AS, and a strainer that prevents the precipitate from returning to the intermediate chamber 12.

A lithium recovery method according to the modification of the first embodiment of the present invention will be described with reference to FIG. 5. FIG. 5 omits the circulation device 71 and the stirring device 72. The lithium recovery method according to this modification can be performed in the same manner as the lithium recovery method according to the first embodiment, using the lithium recovery device 10A according to the modification of the first embodiment shown in FIG. 4.

In the lithium recovery device 10A, when the sub-power supply 53 applies the voltage V3, cations such as $Li^+$ in the Li-containing aqueous solution SW permeate the ion exchange membrane 62 and migrate to the Li-containing aqueous solution AS. As described in the above embodiment, the potential gradient caused by the voltage V3 causes $Li^+$ to be attracted to the surface of the electrolyte membrane 2 (first electrode 31) by electrostatic attraction in the Li-containing aqueous solution AS. The reactions caused by the application of the voltages V1, V2, and V3 are as described in the above embodiment. When the ion exchange membrane 62 is a monovalent cation permselective ion exchange membrane or a bipolar monovalent ion permselective ion exchange membrane, only monovalent cations such as $Li^+$, $K^+$, and $Na^+$ migrate to the Li-containing aqueous solution AS, and divalent and trivalent cations such as $Ca^{2+}$ do not migrate thereto. Therefore, the amount of precipitates in the Li-containing aqueous solution AS in contact with the surface of the electrolyte membrane 2 on the supply side can be reduced, thus preventing inhibition of $Li^+$ migration from the Li-containing aqueous solution AS to the Li recovery aqueous solution RS.

The settings of the voltages V1, V2, and V3 are as described in the above embodiment. However, the resistance $R_{sw}$ of the Li-containing aqueous solution $SW_E$ is the sum of the resistances of the Li-containing aqueous solutions SW and AS and the ion exchange membrane 62 between the first electrode 31 and the sub-electrode 41. When the Li-containing aqueous solution AS is pure water (containing no $Li^+$) or a low-concentration LiOH aqueous solution at the start of recovery, it is preferable that only the sub-power supply 53 is first operated to move $Li^+$ to the Li-containing aqueous solution AS and then the first power supply 51 and the second power supply 52 are further operated after a predetermined concentration is reached.

In the lithium recovery device according to this modification, anions such as chloride ions are blocked from the Li-containing aqueous solution in the supply chamber. This can prevent the aqueous solution in contact with the surface of the electrolyte membrane on the supply side from containing anions, further preventing the first electrode provided on this surface of the electrolyte membrane from deteriorating. Even if the Li-containing aqueous solution in the supply chamber has a low pH of acidic to slightly alkaline, the aqueous solution in contact with the surface of the electrolyte membrane on the supply side can have a high pH, thus increasing $Li^+$ mobility with respect to the applied voltage and improving energy efficiency.

The lithium recovery device according to this modification may be equipped with two or more ion exchange membranes that conduct cations including $Li^+$, and the processing tank may be partitioned into four or more chambers, and two or more intermediate chambers may be provided between the supply chambers at both ends and the recovery chamber. Such a lithium recovery device is configured such that all ion exchange membranes are sandwiched between the first electrode and the sub-electrode in the supply chamber. By providing a plurality of ion exchange membranes, anions such as chloride ions are further blocked from the Li-containing aqueous solution in the supply chamber. This can further prevent the aqueous solution in contact with the surface of the electrolyte membrane on the supply side from containing anions, further preventing the first electrode provided on this surface of the electrolyte membrane from deteriorating. Moreover, the aqueous solution in contact with the surface of the electrolyte membrane on the supply side can have a higher pH, thus further improving energy efficiency.

Not many monovalent cation permselective ion exchange membranes and bipolar monovalent ion permselective ion exchange membranes (collectively referred to as monovalent ion permselective ion exchange membranes as appropriate) have sufficient resistance to strong alkalinity. The aqueous solution obtained by removing anions from the Li-containing aqueous solution SW, on the other hand, tends to become strongly alkaline when the concentration of cations is high. Therefore, in the lithium recovery device 10A according to the modification, when a monovalent ion permselective ion exchange membrane is used as the ion exchange membrane 62 to move monovalent cations only to the Li-containing aqueous solution AS in the intermediate chamber 12, it is necessary to adjust the pH of the Li-containing aqueous solution AS to a predetermined value or less by moving $Li^+$ to the Li recovery aqueous solution RS or by precipitating monovalent cations other than $Li^+$ to remove them from the Li-containing aqueous solution AS before the cation concentration of the Li-containing aqueous solution AS increases. The lithium recovery device according to this modification can be equipped with a combination of a cation exchange membrane that conducts cations including multivalent ions and a monovalent ion permselective ion exchange membrane. However, increasing the number of ion exchange membranes increases the resistance between the first electrode and the sub-electrode, making it difficult to generate a strong electric field if the voltage applied by the sub-power supply is less than the voltage at which water electrolysis occurs. Therefore, it is preferable that only some of the plurality of ion exchange membranes are disposed between the first electrode connected to the sub-power supply and the sub-electrode, and that an additional sub-power supply applies a voltage to the other ion exchange membranes.

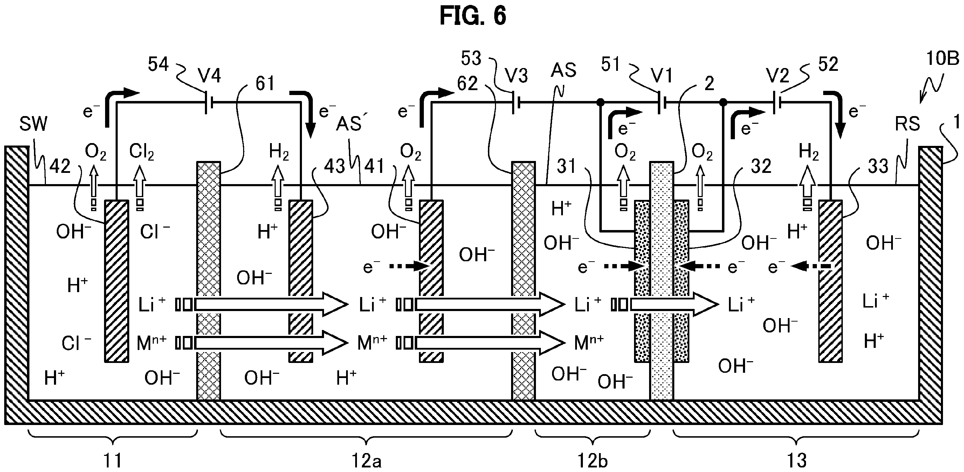

Specifically, as shown in FIG. 6, a lithium recovery device 10B according to another modification of the first embodiment of the present invention includes a processing tank 1, an electrolyte membrane (lithium ion-conducting electrolyte membrane) 2 and ion exchange membranes 61 and 62 that partition the processing tank 1, a first electrode 31 and a second electrode 32 attached to each surface of the electrolyte membrane 2, a third electrode 33, sub-electrodes 41, 42, and 43, three power supplies 53, 51, and 52 connected in series, and a sub-power supply 54. The lithium recovery device 10B may further include a circulation device 71 and a stirring device 72 as necessary (see FIGs. 1 and 4). The processing tank 1 is partitioned in one direction by the two ion exchange membranes 61 and 62 and the electrolyte membrane 2 into four chambers, including a supply chamber (first chamber) 11 that stores a Li-containing aqueous solution SW, an intermediate chamber 12a that stores a Li-containing aqueous solution AS', an intermediate chamber 12b that stores a Li-containing aqueous solution AS, and a recovery chamber (second chamber) 13 that stores a Li recovery aqueous solution RS. Specifically, the ion exchange membrane 61 partitions the supply chamber 11 and the intermediate chamber 12a, the ion exchange membrane 62 partitions the intermediate chamber 12a and the intermediate chamber 12b, and the electrolyte membrane 2 partitions the intermediate chamber 12b and the recovery chamber 13. The third electrode 33 is provided spaced apart from the electrolyte membrane 2 in the recovery chamber 13. The sub-electrodes 41 and 43 are provided spaced part from each other in the intermediate chamber 12a. The sub-electrode 41 faces the ion exchange membrane 62, and the sub-electrode 43 faces the ion exchange membrane 61. The sub-electrode 42 is provided in the supply chamber 11. The sub-power supply 54 has a positive electrode connected to the sub-electrode 42 and has a negative electrode connected to the sub-electrode 43. Therefore, the lithium recovery device 10B according to this modification is different from the lithium recovery device 10A according to the above embodiment shown in FIG. 4 in further including the ion exchange membrane 61 that partitions the processing tank 1 on the supply side of the sub-electrode 41, the sub-power supply 54 for applying a voltage between both surfaces of the ion exchange membrane 61, and the sub-electrodes 42 and 43 connected to the sub-power supply 54.

Similar to the ion exchange membrane 62, the ion exchange membrane 61 is provided on the $Li^+$ supply side of the electrolyte membrane 2, and conducts cations containing at least $Li^+$. The same ion exchange membrane as the ion exchange membrane 62 can be used as the ion exchange membrane 61. Alternatively, a cation exchange membrane that conducts cations containing multivalent ions may be used as one of the ion exchange membranes 61 and 62, and a monovalent cation permselective ion exchange membrane or a bipolar monovalent ion permselective ion exchange membrane may be used as the other.

The sub-electrode 42 and the sub-electrode 43 are electrodes connected to the sub-power supply 54 to apply a voltage between both surfaces of the ion exchange membrane 61, thus generating a potential difference that is higher on the supply chamber 11 side. To this end, the sub-electrode 42 is disposed in the supply chamber 11 and the sub-electrode 43 is disposed in the intermediate chamber 12a so as to face the ion exchange membrane 61, respectively. It is preferable that the sub-electrode 42 and the sub-electrode 43 are disposed parallel to each other. The sub-electrodes 42 and 43 preferably have a net-like shape through which the aqueous solution passes, so that the aqueous solutions SW and AS' in contact with the surface of the ion exchange membrane 61 are continuously circulated in the chambers 11 and 12a. In this modification, the sub-electrode 41 formed of an electrode material that is stable even when a voltage is applied in the Li-containing aqueous solution AS', including after Li recovery. The same applies to the sub-electrode 43. Similar to the sub-electrode 41 of the first embodiment, the sub-electrode 42 is formed of an electrode material that is stable even when a voltage is applied in the Li-containing aqueous solution SW. The sub-electrode 43 is disposed spaced apart from the sub-electrode 41 provided in the same intermediate chamber 12a. Therefore, the same intermediate chamber 12a, that is, the distance between the ion exchange membrane 61 and the ion exchange membrane 62 is set to a sufficient length in the partitioning direction of the processing tank 1 (horizontal direction in FIG. 6).

The sub-power supply 54 applies a voltage V4 between both surfaces of the ion exchange membrane 61, that is, between the Li-containing aqueous solution SW and the Li-containing aqueous solution AS', so that the Li-containing aqueous solution SW on the supply chamber 11 side generates a high potential difference, thereby moving cations including $Li^+$ in the Li-containing aqueous solution SW to the Li-containing aqueous solution AS'. The sub-power supply 54 is a DC power supply, as with the sub-power supply 53, and has a positive electrode connected to the sub-electrode 42 in the supply chamber 11 and a negative electrode connected to the sub-electrode 43 in the intermediate chamber 12a.

The Li-containing aqueous solution AS' is an aqueous solution obtained by removing anions other than $OH^-$, such as $Cl^-$, from the Li-containing aqueous solution SW stored in the supply chamber 11. The Li-containing aqueous solution AS' can be pure water, as with the Li-containing aqueous solution AS and the Li recovery aqueous solution RS, at the start of recovery (at the start of power application), and is preferably a $Li^+$-containing aqueous solution (LiOH aqueous solution).

Here, as described above, not many monovalent ion permselective ion exchange membranes have sufficient resistance to strong alkalinity. In this modification, when moving only monovalent cations including $Li^+$ to the Li-containing aqueous solution AS in the intermediate chamber 12b, it is preferable that a monovalent ion permselective ion exchange membrane is used as the ion exchange membrane 61 and an acid is added in advance to prevent the Li-containing aqueous solution AS' from becoming strongly alkaline due to the cations moved from the Li-containing aqueous solution SW. As for the acid to be added to the Li-containing aqueous solution AS', one that does not precipitate $Li^+$ is selected, and nitric acid, sulfuric acid, or the like is preferable, avoiding $Cl^-$ that easily generates gas through oxidation reaction and impairs the catalytic activity of the platinum electrode. Even if the Li-containing aqueous solution AS' contains anions such as NOs, these anions are blocked by the ion exchange membrane 62 and thus are not contained in the Li-containing aqueous solution AS in contact with the electrolyte membrane 2. On the other hand, the Li-containing aqueous solution AS that does not contain anions other than $OH^-$ may become strongly alkaline. Therefore, it is preferable to use a cation exchange membrane with high alkali resistance as the ion exchange membrane 62. With such a configuration, the $Li^+$ concentration of the Li-containing aqueous solution AS that contacts the surface of the electrolyte membrane 2 on the supply chamber 11 side can be sufficiently increased to efficiently recover Li with high $Li^+$ mobility.

A lithium recovery method using the lithium recovery device 10B according to this modification can be performed in the same manner as the lithium recovery method using the lithium recovery device 10A according to the above modification (see FIG. 5), wherein the power supplies 51, 52, and 53 each apply a voltage and the sub-power supply 54 further applies a voltage. The settings of the voltages V1, V2, and V3 are as described in the above modification. The larger the voltage V4 applied by the sub-power supply 54, the stronger the electric field generated in the aqueous solutions SW and AS' between the sub-electrode 42 and the sub-electrode 43, leading to an increase in migration amount of cations, including $Li^+$ contained in the Li-containing aqueous solution SW, per hour to the Li-containing aqueous solution AS'. When the $Li^+$ migration amount per hour is small, the $Li^+$ concentration of the Li-containing aqueous solution AS' decreases and the $Li^+$ concentration of the Li-containing aqueous solution AS also decreases, thus limiting the $Li^+$ mobility.

When the voltage V4 is larger than a certain value, on the other hand, the reaction of Formula (1) below occurs near the sub-electrode 42 to generate $O_2$. When the Li-containing aqueous solution SW contains chloride ions ($Cl^-$), the reaction of Formula (2) below occurs to generate chlorine ($Cl_2$). At the same time, the reaction of Formula (4) below occurs near the sub-electrode 42 to generate $H_2$. The energy efficiency decreases as the reaction amount of these reactions increases. It is thus preferable that the voltage V4 is as small as not to limit the $Li^+$ mobility. The electric field generated by the application of the voltage V4 becomes stronger with respect to the voltage V4 as the distance between the sub-electrodes 42 and 43 and the ion exchange membrane 61 is shorter and as the electron conductivity of the Li-containing aqueous solutions SW and AS' is higher. Therefore, by providing the sub-electrodes 42 and 43 and using an aqueous solution containing ions at the start of operation as the Li-containing aqueous solution RS', the migration amount of cations including $Li^+$ per hour can be increased with respect to the voltage V4.

[Chem. 9]

$$2OH^- \rightarrow H_2O + \frac{1}{2}O_2 \uparrow + 2e^- \quad \cdots \quad (1)$$

$$2Cl^- \rightarrow Cl_2 \uparrow + 2e^- \qquad (2)$$

$$2H_2O + 2e^- \rightarrow 2OH^- + H_2 \uparrow \qquad (4)$$

As in the above modification, when the Li-containing aqueous solution AS is pure water or a low-concentration LiOH aqueous solution at the start of recovery, it is preferable that the sub-power supplies 53 and 54 are first operated to move Li$^+$ to the Li-containing aqueous solution AS and then the first power supply 51 and the second power supply 52 are further operated after a predetermined concentration is reached. The lithium recovery device 10B makes it possible to individually set the voltages applied between both surfaces of the ion exchange membrane 61 and between both surfaces of the ion exchange membrane 62, respectively. This makes it easier to individually control the pH of the Li-containing aqueous solutions AS' and AS during operation.

In the lithium recovery device 10B according to this modification, the ion exchange membrane 61 can also be a cation exchange membrane that conducts cations including multivalent ions, and the ion exchange membrane 62 can also be a monovalent ion permselective ion exchange membrane. With such a configuration, only multivalent ions among the cations contained in the Li-containing aqueous solution SW can be precipitated and recovered from the Li-containing aqueous solution AS' in the intermediate chamber 12a. The monovalent ions other than Li$^+$ can also be recovered from the Li-containing aqueous solution AS in the intermediate chamber 12b. However, in order to prevent the Li-containing aqueous solutions AS' and AS in contact with both surfaces of the ion exchange membrane 62 from becoming strongly alkaline, it is preferable that the power supplies 51, 52, 53, and 54 are driven to prevent the cations from being highly concentrated, or the cations other than Li$^+$ are recovered in a timely manner from the Li-containing aqueous solutions AS' and AS. Alternatively, the lithium recovery device 10B according to this modification may include three ion exchange membranes, including a cation exchange membrane, a monovalent ion permselective ion exchange membrane, and a cation exchange membrane, which are disposed in this order, and may be equipped with three intermediate chambers. Then, an acid is added to aqueous solutions in the first and second intermediate chambers from the supply side to prevent them from becoming strongly alkaline. With such a configuration, the Li+ concentration of the aqueous solution that contacts the electrolyte membrane 2 in the third intermediate chamber can be increased, and multivalent cations can be recovered from the first intermediate chamber.

[Second Embodiment]

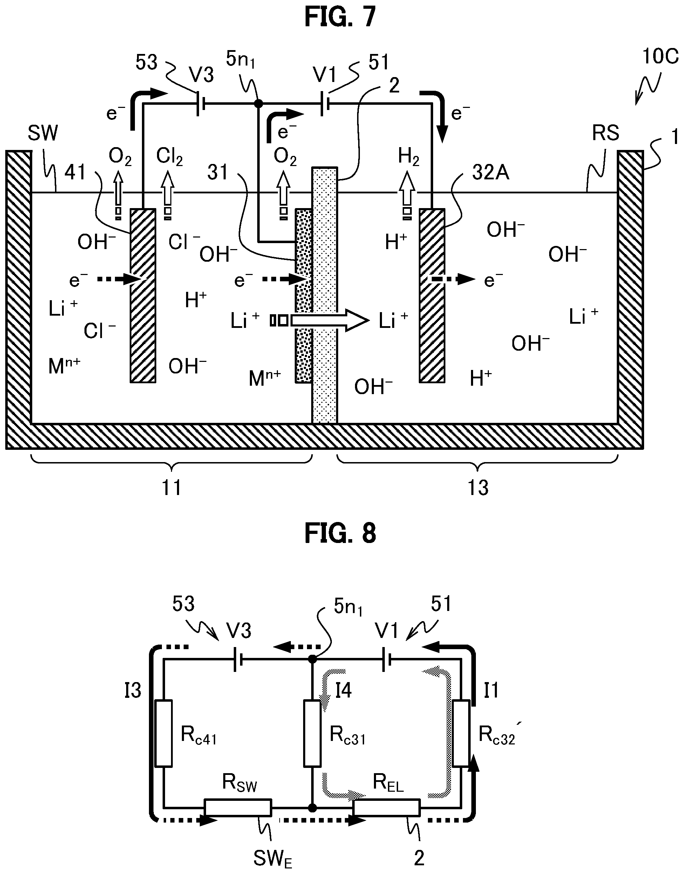

In the lithium recovery device according to the above embodiment, the third electrode is provided spaced part from the electrolyte membrane in the recovery chamber, thereby increasing the voltage applied between both surfaces of the electrolyte membrane and increasing the Li recovery rate. On the other hand, Li can also be slowly recovered by operating at a small voltage. Hereinafter, a lithium recovery device and a lithium recovery method according to a second embodiment of the present invention will be described with reference to FIG. 7.

(Lithium Recovery Device)

As shown in FIG. 7, a lithium recovery device 10C according to the second embodiment of the present invention includes a processing tank 1, an electrolyte membrane (lithium ion-conducting electrolyte membrane) 2 that partitions the processing tank 1 into a supply chamber (first chamber) 11 and a recovery chamber (second chamber) 13, a first electrode 31 attached onto a surface of the electrolyte membrane 2 on the supply chamber 11 side, a second electrode 32A provided in the recovery chamber 13, a sub-electrode 41 provided in the supply chamber 11, and a sub-power supply 53 and a first power supply 51 connected in series. The lithium recovery device 10C may further include a circulation device 71 and a stirring device 72 as necessary (see FIGs. 1 and 4). The lithium recovery device 10C according to this embodiment is different from the lithium recovery device 10 according to the first embodiment shown in FIG. 1 in omitting the second power supply 52 and the third electrode 33 and in including the second electrode 32A spaced apart from the electrolyte membrane 2, instead of the second electrode 32. In the lithium recovery device 10C, the first power supply 51 serves solely as a main power supply to apply a voltage V1 between both surfaces of the electrolyte membrane 2 and between a Li-containing aqueous solution SW and a Li recovery aqueous solution RS.

As with the second electrode 32 of the first embodiment, the second electrode 32A is an electrode paired with the first electrode 31 to apply a voltage between both surfaces of the electrolyte membrane 2. It is preferable that the second electrode 32A is disposed in the recovery chamber 13 so as not to contact the electrolyte membrane 2. The distance between the second electrode 32A and the electrolyte membrane 2 is preferably not long. It is also preferable that the second electrode 32A is disposed parallel to the electrolyte membrane 2. As with the second electrode 32 of the first embodiment, the second electrode 32A preferably has a shape such as a mesh so as to increase the contact area with the Li recovery aqueous solution RS. Alternatively, as with the second electrode 32 of the first embodiment, the second electrode 32A may have a porous structure and may be provided in contact with the electrolyte membrane 2. The second electrode 32A is formed of an electrode material that has catalytic activity and electron conductivity for the reaction of Formula (4) below and that is stable even when a voltage is applied in the Li recovery aqueous solution RS, including after Li recovery. The electrode material is preferably platinum (Pt), for example.

[Chem. 10]

$$2H_2O + 2e^- \rightarrow 2OH^- + H_2 \uparrow \qquad (4)$$

(Lithium Recovery Method)

A lithium recovery method according to the second embodiment of the present invention will be described with reference to FIG. 7. The lithium recovery method according to this embodiment is performed as follows using the lithium recovery device 10C according to the second embodiment.

In the lithium recovery device 10, the sub-power supply 53 and the first power supply 51, which are connected in series, can be considered as one power supply (referred to as a power supply 53-51). The power supply 53-51 applies a positive voltage (V3+V1), with respect to the second electrode 32A, to the sub-electrode 41. At the same time, the first power supply 51 applies a positive voltage V1, with respect to the second electrode 32A, to the first electrode 31. Then, in the Li-containing aqueous solution SW in the supply chamber 11, as in the first embodiment, OH$^-$ in the Li-containing aqueous solution SW causes the reaction of Formula (1) below in the vicinity of the sub-electrode 41 and the first electrode 31, releasing electrons e$^-$ to generate H$_2$O and O$_2$ and emitting the electrons e$^-$ to the sub-electrode 41 and the first electrode 31. When the Li-containing aqueous solution SW contains Cl$^-$, the reaction of Formula (2) below further occurs near the sub-electrode 41, emitting electrons e$^-$ to generate Cl$_2$. In the Li-containing aqueous solution SW, as OH$^-$ and other anions decrease, the reaction of Formula (3) below, where Li$^+$ in the Li-containing aqueous solution SW migrates into the electrolyte membrane 2, occurs on the surface of the electrolyte membrane 2, that is, near the first electrode 31 to maintain the charge balance.

[Chem. 11]

$$2OH^- \rightarrow H_2O + \frac{1}{2}O_2 \uparrow + 2e^- \quad \cdots \quad (1)$$

$$2Cl^- \rightarrow Cl_2 \uparrow + 2e^- \qquad (2)$$

$$Li^+ \rightarrow Li^+(electrolyte) \qquad (3)$$

On the other hand, in the Li recovery aqueous solution RS in the recovery chamber 13, the electrons e$^-$ are supplied to H$_2$O in the Li recovery aqueous solution RS to cause the reaction of Formula (4) below near the second electrode 32A, thus generating H$_2$ and OH$^-$. As OH$^-$ increases, the reaction of Formula (5) below, which causes Li$^+$ in the electrolyte membrane 2 to migrate, occurs on the surface of the electrolyte membrane 2 to maintain the charge balance.

[Chem. 12]

$$2H_2O + 2e^- \rightarrow 2OH^- + H_2 \uparrow \qquad (4)$$

$$Li^+(electrolyte) \rightarrow Li^+ \qquad (5)$$

From the reaction of Formula (3) to the reaction of Formula (5), that is, the infiltration of Li$^+$ in the Li-containing aqueous solution SW from the surface of the electrolyte membrane 2 to the inside thereof, the Li$^+$ migration in the electrolyte membrane 2, and the migration of Li$^+$ in the electrolyte membrane 2 into the Li recovery aqueous solution RS are as described in the first embodiment. In this embodiment, when the potential difference between both surfaces of the electrolyte membrane 2 due to the application of the voltage V1 is higher than or equal to the electrolyte reduction voltage of the electrolyte membrane 2, the electrolyte membrane 2 develops electron conductivity. Even when the voltage V1 is further increased, the Li recovery rate does not increase as much as the voltage V1 increases, and the energy efficiency rapidly decreases (see Patent Literature 2). Specifically, although depending on the electronic conductivity of the electrolyte membrane 2 and the electrode performance that determines the electrode reaction overvoltage, the electrolyte membrane 2 can develop the electronic conductivity when a voltage of more than 2.0 V is applied between both surfaces thereof. Therefore, in this embodiment, it is preferable to set the voltage V1 applied by the first power supply 51 so that the potential difference between both surfaces of the electrolyte membrane 2 is lower than or equal to the electrolyte reduction voltage. In the lithium recovery device 10C according to this embodiment, the second electrode 32A is provided spaced apart from the electrolyte membrane 2, and thus the voltage V1 can be set to be larger, by a certain degree, than the electrolyte reduction voltage of the electrolyte membrane 2.

As in the first embodiment, the voltage V3 is less than the voltage at which water electrolysis occurs. In this embodiment, even if the voltage V3 is higher than or equal to the above value determined by adding the electrode performance and the like to the theoretical voltage for water electrolysis (1.229 V), water electrolysis does not occur when the voltage V1 is larger than the voltage V3 by a certain degree. However, even if the voltage V3 is less than the voltage at which water electrolysis occurs, the electrolyte membrane 2 exhibits electron conductivity once the voltage V3 exceeds a certain level with respect to the voltage V1. Here, reference numeral "$SW_E$" represents a portion of the Li-containing aqueous solution SW sandwiched between the first electrode 31 and the sub-electrode 41, and reference numeral "$RS_E$" represents a portion of the Li recovery aqueous solution RS sandwiched between the electrolyte membrane 2 and the second electrode 32A. The lithium recovery device 10C according to this embodiment includes a closed circuit in which the first power supply 51, the sub-power supply 53, the Li-containing aqueous solution $SW_E$, the electrolyte membrane 2, the Li recovery aqueous solution $RS_E$ (not shown), and the first power supply 51 are connected in a loop in this order, as shown in FIG. 8. In this closed circuit (first circuit), the first power supply 51 and the sub-power supply 53 connected in series (power supply 53-51) supply currents I3 and I1 flowing counterclockwise as indicated by the dotted pattern arrows.

In the lithium recovery device 10C, the positive electrode of the first power supply 51 and the negative electrode (connection node $5n_1$) of the sub-power supply 53 are connected to the electrolyte membrane 2 and the Li-containing aqueous solution $SW_E$ through the first electrode 31, respectively. Therefore, in the lithium recovery device 10C, currents can flow in either direction from the connection node $5n_1$ to the electrolyte membrane 2 or from the Li-containing aqueous solution $SW_E$ or the electrolyte membrane 2 to the connection node 5m. As described in the first embodiment, the lithium recovery device 10C is configured such that the current I4 flows or does not flow from the connection node $5n_1$ to the electrolyte membrane 2. To this end, the lithium recovery device 10C includes a closed circuit as a second circuit, including the first power supply 51, the electrolyte membrane 2, and the Li recovery aqueous solution $RS_E$ (not shown). The first power supply 51 supplies the currents I4 and I1 flowing counterclockwise as indicated by the gray arrows. I4 represents the current that is branched from the current I1 (from the connection node $5n_1$) and flows to the electrolyte membrane 2 through the first electrode 31.

The lithium recovery device 10 may set the voltage V3 to allow the current I4 to flow in such a direction or to prevent the current I4 from flowing in such a direction (from flowing in the opposite direction), that is, to satisfy $I4 \geq 0$. As for the current I4, $I1 \geq I3$ may be satisfied since $I3+I4= I1$ holds true. $R_{EL}$ represents the resistance of the electrolyte membrane 2 (the resistance between the first electrode 31 and the second electrode 32A and $Li^+$ migration resistance. Rsw represents the resistance of the Li-containing aqueous solution $SW_E$ (the resistance between the first electrode 31 and the sub-electrode 41). In this embodiment, the resistance $R_{EL}$ includes the resistance of the Li recovery aqueous solution $RS_E$ (the resistance between the electrolyte membrane 2 and the second electrode 32A) (the sum of the resistance of the electrolyte membrane 2 and the resistance of the Li recovery aqueous solution $RS_E$). The lithium recovery device 10C further includes a reaction resistance $R_{c41}$ due to the reaction of Formula (1) ($O_2$ generation) and the reaction of Formula (2) ($Cl_2$ generation) in the sub-electrode 41, a reaction resistance $R_{c31}$ due to the reaction of Formula (1) and the reaction of Formula (2) in the first electrode 31. Then, Formula (19) below represents the first circuit and Formula (20) below represents the second circuit. Here, resistances of the electrodes 31, 32A, and 41 and wiring are ignored.

[Math. 4]

$$V1 + V3 = I1 \times (R_{EL} + R_{c32}{}') + I3 \times (R_{SW} + R_{c41}) \cdots (19)$$

$$V1 = I1 \times (R_{EL} + R_{c32}{}') + I4 \times R_{c31}$$

$$= I1 \times (R_{EL} + R_{c31} + R_{c32}{}') - I3 \times R_{c31} \quad \cdots (20)$$

Formula (9) below is obtained from Formulas (19) and (20). The current I1 is expressed by Formula (21) below from Formula (20). The current I3 is expressed by Formula (13) below from Formula (9). Formula (22) below may hold true to satisfy $I1 \geq I3$. Formula (23) below is obtained by solving Formula (22). Formula (24) below is obtained by substituting Formula (13) for I3 in Formula (22) below and solving for I1. Formula (25) below is obtained by substituting Formula (24) in Formula (23).

[Math. 5]

$$V3 = I3 \times (R_{SW} + R_{c31} + R_{c41}) - I1 \times R_{c31} \quad \cdots (9)$$

$$I1 = \frac{V1 + I3 \times R_{c31}}{R_{EL} + R_{c31} + R_{c32}'} \quad \cdots (21)$$

$$I3 = \frac{V3 + I1 \times R_{c31}}{R_{SW} + R_{c31} + R_{c41}} \quad \cdots (13)$$

$$I1 \geq \frac{V3 + I1 \times R_{c31}}{R_{SW} + R_{c31} + R_{c41}} \quad \cdots (22)$$

$$I1 \geq \frac{V3}{R_{SW} + R_{c41}} \quad \cdots (23)$$

$$I1 \times [(R_{SW} + R_{c41}) \times (R_{EL} + R_{c31} + R_{c32}') + (R_{EL} + R_{c32}') \times R_{c31}]$$

$$= (R_{SW} + R_{c31} + R_{c41}) \times V1 + R_{c31} \times V3 \quad \cdots (24)$$

$$V3 \leq \frac{R_{SW} + R_{c41}}{R_{EL} + R_{c32}} \times V1 \quad \cdots (25)$$

Therefore, the voltage V3 is less than the voltage at which water electrolysis occurs, and preferably higher within this range. To this end, the lithium recovery device 10 may connect ammeters in series (not shown) to the first power supply 51 and the sub-power supply 53, for example, and apply voltages V1 and V3 while measuring currents I1 and I3. A higher effect can be obtained by strengthening the electric field generated in the Li-containing aqueous solution SW even when the voltage V3 is low, as the resistance $R_{SW}$ between the first electrode 31 and the sub-electrode 41 and the reaction resistance $R_{c41}$ at the sub-electrode 41 are lower. The reaction resistance $R_{c41}$ is lower as the area of the sub-electrode 41 immersed in the Li-containing aqueous solution SW is larger and as the catalytic activity of the sub-electrode 41 for the reaction of Formula (1) increases. The resistance $R_{SW}$ is lower as the areas of the first electrode 31 and the sub-electrode 41 immersed in the Li-containing aqueous solution SW are larger and as the distance between them is shorter. The higher the electron conductivity of the Li-containing aqueous solution SW, the lower the resistance Rsw.

In this embodiment, as in the first embodiment, the sub-power supply 53 is provided, which is connected in series to the positive electrode of the first power supply 51 that applies a voltage between both surfaces of the electrolyte membrane 2, and the sub-electrode 41 having a potential higher than that of the surface of the electrolyte membrane 2 is provided in the Li-containing aqueous solution SW. Therefore, Li$^+$ can be efficiently recovered from the Li-containing aqueous solution SW as a Li source containing a high concentration of Cl$^-$, such as seawater, or a Li source with a low Li$^+$ concentration.

(Modification)

The lithium recovery device according to this embodiment may be equipped with ion exchange membranes 61 and 62 and may have a configuration in which the processing tank 1 is partitioned into three or more chambers, similar to the lithium recovery devices 10A and 10B according to the modifications of the first embodiment shown in FIGs. 4 and 6.

EXAMPLE

The lithium recovery device and the lithium recovery method according to the present invention have been described above based on the embodiments of the present invention. Hereinafter, examples in which the effects of the present invention have been confirmed will be described. It should be noted that the present invention is not limited to these examples and the above embodiments. It goes without saying that various changes and modifications based on these descriptions are also included in the spirit of the present invention.

With the lithium recovery device according to the first embodiment of the present invention shown in FIG. 1 and the lithium recovery device according to the second embodiment of the present invention shown in FIG. 7, a lithium migration amount is measured when a voltage is applied for a certain period of time.

(Preparation of Lithium Recovery Device)

The lithium recovery device uses a 50 mm×50 mm, 0.5 mm thick plate-like $La_{0.57}Li_{0.29}TiO_3$ (lithium-ion conducting ceramic LLTO, produced by TOHO TITANIUM CO., LTD.) as an electrolyte membrane. In regions of 19.5 mm×20.5 mm in center portions of the respective surfaces of this electrolyte membrane, lattice-shaped electrodes each having a thickness of 10 $\mu$m, a width of 0.5 mm, and an interval of 0.5 mm are formed as a first electrode and a second electrode. Moreover, leads for connecting the electrodes and the power supply are formed. The first electrode, the second electrode, and the leads are formed by screen-printing a Pt paste on the surfaces of the electrolyte membrane, followed by baking at 900 °C for 1 h. A 20 mm×20 mm Pt mesh electrode is used as a sub-electrode and a 20 mm×20 mm Ni mesh electrode is used as a third electrode. The electrolyte membrane on which the electrodes and the like are formed is set in a processing tank formed of acrylic plates to partition the processing tank into a supply chamber and a recovery chamber, and the sub-electrode is disposed in the supply chamber and the third electrode is disposed in the recovery chamber so as to face the electrodes on the surfaces of the electrolyte membrane (distance between the sub-electrode and the electrolyte membrane: 50 mm). The processing tank is accommodated in a constant-temperature tank having a temperature adjustment function. Then, the first power supply is connected between the first and second electrodes with the first electrode as the positive electrode, the second power supply is connected in series to the positive electrode of the first power supply, and the negative electrode thereof is connected to the third electrode, thus obtaining the lithium recovery device. Furthermore, ammeters are inserted between the first power supply and the first electrode and between the second power supply and the first power supply and the third electrode (between the second power supply 52 and the connection node $5n_2$ in FIG. 2).

Into the supply chamber of the lithium recovery device, 150 ml of 1.0 mol/L, 0.1 mol/L, and 0.001 mol/L lithium hydroxide (LiOH) aqueous solutions is fed as a Li-containing aqueous solution (Li source), such that the first electrode and the sub-electrode are completely immersed. Also, into the recovery chamber of the lithium recovery device, 150 ml of 0.1 mol/L lithium hydroxide aqueous solution is fed as a Li recovery aqueous solution, such that the second electrode and the third electrode are completely immersed. In addition, the same lithium hydroxide aqueous solution is accommodated as a replacement in a replenishment tank for the Li-containing aqueous solution and a replenishment tank for the Li recovery aqueous solution installed outside the processing tank of the lithium recovery device in the constant-temperature tank. Then, the solution temperature of the lithium hydroxide aqueous solution is adjusted to 40 °C, which is the same as that of the lithium hydroxide aqueous solutions in the supply chamber and the recovery chamber.

(Lithium Recovery Experiment)

As Example 1 according to the first embodiment (see FIG. 1) of the present invention, the first power supply (voltage V1), the second power supply (voltage V2), and the sub-power supply (voltage V3) apply a DC voltage shown in Table 1 for 1 h. To suppress changes in the concentration of lithium hydroxide aqueous solution in the supply chamber and recovery chamber due to electrodialysis, the lithium hydroxide aqueous solution is fed into the supply chamber and the recovery chamber, respectively, at a constant rate using a liquid feed pump from the replenishment tank while applying the voltage. At the same time, the aqueous solution is pumped out at the same rate. After applying the voltage, the Li concentrations of the aqueous solution in the recovery chamber and the aqueous solution pumped out from the recovery chamber are measured using an inductively coupled plasma optical emission spectrometry (ICP-OES) device (Optima 7000DV, manufactured by PerkinElmer, Inc.), thus calculating the Li migration amount due to voltage application for 1 h. Table 1 shows the Li migration amount per hour.

As Example 2 according to the second embodiment (see FIG. 7) of the present invention, the first power supply (voltage V1) and the sub-power supply (voltage V3) apply a DC voltage shown in Table 1 for 1 h. As Comparative Example 1, the first power supply (voltage V1) and the second power supply (voltage V2) apply a voltage for 1 h. As Comparative Example 2, only the first power supply (voltage V1) applies a voltage for 1 h. Similar to the above experiment, the same concentration of lithium hydroxide aqueous solution is fed into the supply chamber and the recovery chamber, respectively, from the replenishment tank while applying the voltage. At the same time, the aqueous solution is pumped out at the same rate. After applying the voltage, the Li concentrations of the aqueous solution in the recovery chamber and the lithium hydroxide aqueous solution pumped out from the recovery chamber are measured, thus calculating the Li migration amount per hour, which is shown in Table 1.

A 1.0 mol/L lithium chloride (LiCl) aqueous solution is prepared as the Li-containing aqueous solution (Li source) and a 1.0 mol/L lithium hydroxide aqueous solution is prepared as the Li recovery aqueous solution. Then, a lithium recovery experiment is conducted for Example 1 and Comparative Example 1, as in the case of the lithium hydroxide aqueous solution. Also, a 1.0 mol/L lithium chloride (LiCl) aqueous solution is prepared as the Li-containing aqueous solution (Li source) and a 0.1 mol/L lithium hydroxide aqueous solution is prepared as the Li recovery aqueous solution. Then, a lithium recovery experiment is conducted for Example 2 and Comparative Example 2, as in the case of the lithium hydroxide aqueous solution. After applying the voltage, the Li concentrations of the aqueous solution in the recovery chamber and the lithium hydroxide aqueous solution pumped out from the recovery chamber are measured, thus calculating the Li migration amount per hour, which is shown in Table 1.

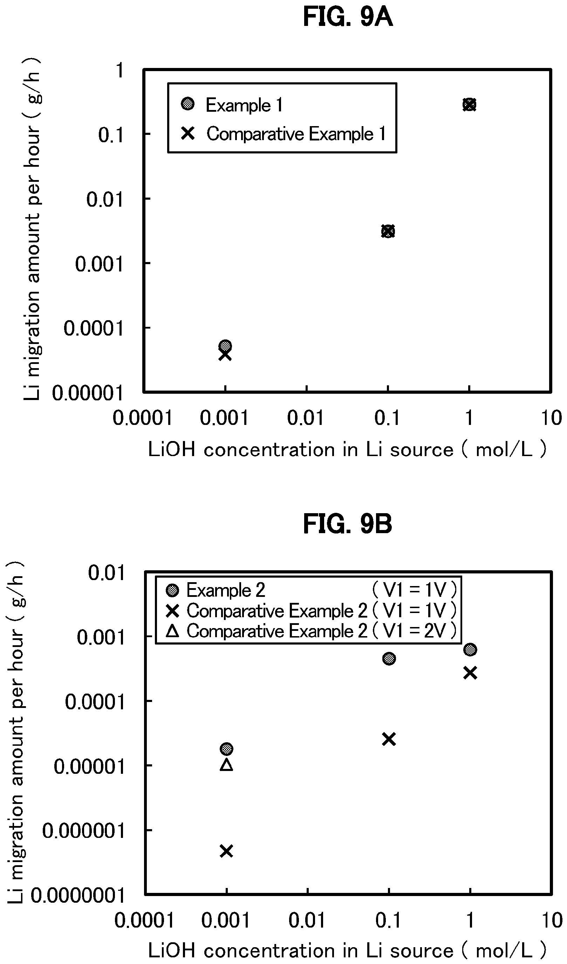

FIG. 9A is a graph showing dependence of Li migration amount per hour on the LiOH concentration of the Li source, using the lithium hydroxide aqueous solution as the Li-containing aqueous solution (Li source), for Example 1 and Comparative Example 1, and FIG 9B is a graph of Example 2 and Comparative Example 2. FIG. 10 is a graph showing the Li migration amount per hour using a 0.001 mol/L lithium hydroxide aqueous solution and a 1.0 mol/L lithium chloride aqueous solution in Examples and Comparative Examples.

[Table 1]

| | Voltage (V) | | | Li migration amount per hour (mg/h) | | | |
| | Between both surface of electrolyte membrane V1 | Between sub-electrode and electrolyte membrane surface in supply chamber V3 | Between electrolyte membrane surface and sub-electrode in recovery chamber V2 | Li source | | | |
| | | | | Aqueous solution | Concentration (mol/L) | | |
| | | | | | 1.0 | 0.1 | 0.001 |
| Example 1 | 5.0 | 1.2 | 5.0 | LiOH | 288 | 3.11 | 0.0518 |
| Comparative Example 1 | 5.0 | - | 5.0 | LiOH | 283 | 3.11 | 0.0388 |
| Example 2 | 1.0 | 1.0 | - | LiOH | 0.624 | 3.13 | 0.0181 |
| Comparative Example 2 | 1.0 | - | - | LiOH | 0.275 | 0.455 | 0.000472 |
| Comparative Example 2 | 2.0 | - | - | LiOH | | 0.0258 | 0.0104 |
| Example 1 | 5.0 | 1.2 | 10 | LiCl | 5.64 | | |
| Comparative Example 1 | 5.0 | - | 10 | LiCl | 0.246 | | |
| Example 2 | 1.0 | 1.0 | - | LiCl | 0.111 | | |
| Comparative Example 2 | 1.0 | - | - | LiCl | 0.00101 | | |

Comparing Example 1 and Comparative Example 1, and Example 2 and Comparative Example 2, as shown in Table 1 and FIGs. 9A and 9B, the lower the concentration of the lithium hydroxide aqueous solution as the Li source, the higher the effects of Example 1 and Example 2 according to the present invention. Table 1 and FIG. 10 also show high effects of Example 1 and Example 2 according to the present invention when the lithium chloride aqueous solution is used as the Li source. Comparing Example 1 and Example 2, the low-potential third electrode provided on the recovery chamber side can increase the applied voltage V1 between both surfaces of the electrolyte membrane, thus increasing the Li recovery rate.

It is confirmed from the above that the lithium recovery device and the lithium recovery method according to the embodiment of the present invention realize faster Li recovery from a Li source with a low Li concentration or a Li source containing Cl⁻.

**Reference Signs List**

10, 10A, 10B, 10C      lithium recovery device
1                processing tank

| | |
|---|---|
| 11 | supply chamber (first chamber) |
| 12 | intermediate chamber |
| 12a, 12b | intermediate chamber |
| 13 | recovery chamber (second chamber) |
| 2 | electrolyte membrane (lithium ion-conducting electrolyte membrane) |
| 31 | first electrode |
| 32, 32A | second electrode |
| 33 | third electrode |
| 41 | sub-electrode |
| 42, 43 | sub-electrode |
| 51 | first power supply |
| 52 | second power supply |
| 53 | sub-power supply |
| 54 | sub-power supply |
| 61, 62 | ion exchange membrane |
| AS | Li-containing aqueous solution |
| RS | Li recovery aqueous solution |
| SW | Li-containing aqueous solution |

**Claims**

1. A lithium recovery device including a processing tank partitioned into a first chamber and a second chamber, in which lithium ions are moved from an aqueous solution containing lithium ions stored in the first chamber to water or an aqueous solution stored in the second chamber, comprising:

   a lithium ion-conducting electrolyte membrane that partitions the processing tank;
   a porous-structure first electrode provided in contact with a surface of the lithium ion-conducting electrolyte membrane on the first chamber side;
   a second electrode provided in the second chamber;
   a sub-electrode provided in the first chamber so as to be spaced apart from the first electrode and the lithium ion-conducting electrolyte membrane;
   a first power supply connected between the first electrode and the second electrode with the first electrode as a positive electrode; and
   a sub-power supply which connects in series to a positive electrode of the first power supply and has a positive electrode connected to the sub-electrode.

2. A lithium recovery device including a processing tank partitioned in one direction into a first chamber, one or more intermediate chambers, and a second chamber in this order, in which lithium ions are moved from an aqueous solution containing lithium ions stored in the first chamber to water or an aqueous solution stored in the second chamber through water or an aqueous solution stored in the intermediate chamber, comprising:

   a lithium ion-conducting electrolyte membrane that partitions the processing tank into the second chamber and the intermediate chamber adjacent thereto;
   one or more ion exchange membranes that partition the processing tank into the intermediate chamber and the intermediate chamber adjacent thereto or the first chamber, and conducts cations including at least lithium ions;
   a porous-structure first electrode provided in contact with a surface of the lithium ion-conducting electrolyte membrane on the first chamber side;
   a second electrode provided in the second chamber;
   a first power supply connected between the first electrode and the second electrode with the first electrode as a positive electrode;
   one or more sub-power supplies that apply a voltage between both surfaces of the ion exchange membrane, thus generating a potential difference that is higher on the first chamber side; and
   a sub-electrode connected to the sub-power supply and provided in the first chamber or one or more of the intermediate chambers so as to face the ion exchange membrane, wherein
   one of the sub-power supplies has a negative electrode not connected to the sub-electrode but connected in series to a positive electrode of the first power supply.

3. The lithium recovery device according to claim 2, wherein

the second electrode has a porous structure and is provided in contact with the lithium ion-conducting electrolyte membrane,

the lithium recovery device further comprising:

a third electrode in the second chamber so as to be spaced apart from the second electrode and the lithium ion-conducting electrolyte membrane; and

a second power supply that is connected in series to a negative electrode of the first power supply and has a negative electrode connected to the third electrode.

4. The lithium recovery device according to claim 3, wherein a voltage of the first power supply is higher than or equal to a voltage applied to the lithium ion-conducting electrolyte membrane to reach a reduction potential of at least one of metal elements contained in the lithium ion-conducting electrolyte membrane.

5. The lithium recovery device according to claim 1 or 2, further comprising:
a circulator for circulating an aqueous solution containing lithium ions between the outside and the inside of the first chamber.

6. A lithium recovery method for moving lithium ions, in a processing tank partitioned into a first chamber and a second chamber by a lithium ion-conducting electrolyte membrane, from an aqueous solution containing lithium ions stored in the first chamber to water or an aqueous solution stored in the second chamber, wherein

a voltage is applied by

a first power supply connected between a porous-structure first electrode, which is provided in contact with a surface of the lithium ion-conducting electrolyte membrane on the first chamber side, and a second electrode provided in the second chamber, with the first electrode as a positive electrode and

a sub-power supply which connects in series to a positive electrode of the first power supply and has a positive electrode connected to a sub-electrode provided in the first chamber so as to be spaced apart from the lithium ion-conducting electrolyte membrane.

7. The lithium recovery method, according to claim 6, wherein

the processing tank is partitioned in one direction into the first chamber, one or more intermediate chambers, and the second chamber in this order,

the intermediate chamber or the intermediate chamber adjacent thereto or the first chamber are partitioned by an ion exchange membrane that conducts cations including at least lithium ions,

the second chamber and the intermediate chamber adjacent thereto are partitioned by the lithium ion-conducting electrolyte membrane, and

lithium ions are moved from an aqueous solution containing lithium ions stored in the first chamber to water or an aqueous solution stored in the second chamber through water or an aqueous solution stored in the intermediate chamber.

8. The lithium recovery method, according to claim 6 or 7, wherein

the second electrode has a porous structure and is provided in contact with the lithium ion-conducting electrolyte membrane, and

a second power supply further applies a voltage, which connects in series to a negative electrode of the first power supply and has a negative electrode connected to a third electrode provided in the second chamber so as to be spaced apart from the second electrode and the lithium ion-conducting electrolyte membrane.

9. The lithium recovery method, according to claim 8, wherein the first power supply applies a voltage that is higher than or equal to a voltage applied to the lithium ion-conducting electrolyte membrane to reach a reduction potential of at least one of metal elements contained in the lithium ion-conducting electrolyte membrane.

# FIG. 1

# FIG. 2

# FIG. 3

# FIG. 4

# FIG. 5

FIG. 6

EP 4 393 569 A1

## FIG. 7

## FIG. 8

# FIG. 9A

# FIG. 9B

# FIG. 10

# FIG. 11

## INTERNATIONAL SEARCH REPORT

| | International application No. |
|---|---|
| | **PCT/JP2022/032300** |

**A.    CLASSIFICATION OF SUBJECT MATTER**

***B01D 61/44***(2006.01)i; ***B01D 61/46***(2006.01)i; ***C02F 1/469***(2006.01)i
FI:    C02F1/469; B01D61/44 500; B01D61/46; B01D61/44 510

According to International Patent Classification (IPC) or to both national classification and IPC

**B.    FIELDS SEARCHED**

Minimum documentation searched (classification system followed by classification symbols)
  B01D61/44; B01D61/46; C02F1/469

Documentation searched other than minimum documentation to the extent that such documents are included in the fields searched

  Published examined utility model applications of Japan 1922-1996
  Published unexamined utility model applications of Japan 1971-2022
  Registered utility model specifications of Japan 1996-2022
  Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2019-141807 A (UNIV HIROSAKI) 29 August 2019 (2019-08-29) | 1, 5-6 |
| | claims, paragraphs [0001], [0017]-[0051] | |
| Y | | 1, 5-6 |
| A | | 3-4, 8-9 |
| Y | JP 9-85249 A (HOSHIZAKI ELECTRIC CO LTD) 31 March 1997 (1997-03-31) | 1, 5-6 |
| | claims, paragraphs [0011], [0014]-[0023], [0026], fig. 1 | |
| A | | 3-4, 8-9 |
| X | JP 2019-141808 A (UNIV HIROSAKI) 29 August 2019 (2019-08-29) | 1-2, 5-7 |
| | claims, paragraphs [0001], [0017], [0039]-[0042], fig. 10 | |
| A | | 3-4, 8-9 |
| A | JP 2012-200666 A (DOWA ECO-SYSTEM CO LTD) 22 October 2012 (2012-10-22) | 3-4, 8-9 |
| | claims, paragraphs [0055]-[0057], fig. 24 | |

☐ Further documents are listed in the continuation of Box C.      ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **17 October 2022** | **01 November 2022** |

| Name and mailing address of the ISA/JP | Authorized officer |
|---|---|
| **Japan Patent Office (ISA/JP)**
**3-4-3 Kasumigaseki, Chiyoda-ku, Tokyo 100-8915**
**Japan** | |
| | Telephone No. |

Form PCT/ISA/210 (second sheet) (January 2015)

**INTERNATIONAL SEARCH REPORT**
Information on patent family members

International application No.

**PCT/JP2022/032300**

| Patent document cited in search report | | | Publication date (day/month/year) | Patent family member(s) | Publication date (day/month/year) |
|---|---|---|---|---|---|
| JP | 2019-141807 | A | 29 August 2019 | (Family: none) | |
| JP | 9-85249 | A | 31 March 1997 | (Family: none) | |
| JP | 2019-141808 | A | 29 August 2019 | (Family: none) | |
| JP | 2012-200666 | A | 22 October 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6233877 B

- JP 2019141807 A

**Non-patent literature cited in the description**

- **KUNUGI S. ; INAGUMA Y. ; ITOH M.** Electrochemical recovery and isotope separation of lithium ion employing lithium ion conductive perovskite-type oxides. *Solid State Ionics,* July 1999, vol. 122 (1-4), 35-39